Europäisches Patentamt

European Patent Office

Office européen des brevets

(19)

(11) **EP 1 304 667 A2**

(12) **EUROPEAN PATENT APPLICATION**

(43) Date of publication:
   **23.04.2003 Bulletin 2003/17**

(51) Int Cl.$^7$: **G07F 17/32**

(21) Application number: **02023065.2**

(22) Date of filing: **16.10.2002**

| | |
|---|---|
| (84) Designated Contracting States:<br>**AT BE BG CH CY CZ DE DK EE ES FI FR GB GR**<br>**IE IT LI LU MC NL PT SE SK TR**<br>Designated Extension States:<br>**AL LT LV MK RO SI**<br><br>(30) Priority: **18.10.2001 JP 2001321250**<br><br>(71) Applicant: **Konami Corporation**<br>**Chiyoda-ku, Tokyo (JP)**<br><br>(72) Inventors:<br> • **Okita, Katsunori**<br>   **Chiyoda-ku, Tokyo (JP)** | • **Kubota, Kazutaka**<br>   **Chiyoda-ku, Tokyo (JP)**<br>• **Harano, Yuuki**<br>   **Chiyoda-ku, Tokyo (JP)**<br>• **Wada, Hiroyuki**<br>   **Chiyoda-ku, Tokyo (JP)**<br>• **Shibamiya, Masakazu**<br>   **Chiyoda-ku, Tokyo (JP)**<br>• **Makiishi, Takashi**<br>   **Chiyoda-ku, Tokyo (JP)**<br><br>(74) Representative: **Müller-Boré & Partner**<br>**Patentanwälte**<br>**Grafinger Strasse 2**<br>**81671 München (DE)** |

(54) **System, apparatus and method for a video game**

(57)     A video game system that offers sense of realism and excitement is provided. This video game system comprises a player information storage unit 371 that stores player information including information regarding virtual money used in the game, a real money conversion unit 161m that performs conversion between virtual money and real money, a virtual money conversion unit 161n that performs conversion between virtual money and prescribed pseudo-values, a virtual money accumulation unit 361b that increases the amount of virtual money stored in the player information storage unit via calculation using the real money conversion unit, and a game result integration unit 161p that converts the amount of increase or decrease in pseudo-values that occurs each time the game is executed into virtual money, adds the increase or decrease to or subtracts from the player's current virtual money amount, and updates the player information stored in the player information storage unit 371 accordingly.

FIG.8

**EP 1 304 667 A2**

**Description**

**BACKGROUND OF THE INVENTION**

**1. Field of the Invention**

The present invention pertains to a technology that can execute a game that can be played by a plurality of players and in which prescribed pseudo-values are transferred.

**2. Description of the Related Art**

Various types of games that can be played by a plurality of players and in which prescribed pseudo-values are transferred have been proposed or are currently in use in the conventional art. In these types of games, as a motivation for the player to play the game, the game results are generally expressed in terms of pseudo-values. In a shooting game, 'pseudo-values' refers to the number of points earned based on the number of enemy characters that have been defeated, while in a board game or mah-jongg game, it refers to the player's performance results in the game, and these points or results have values during the game. For example, using pseudo-values (earned points) earned via a game protagonist, the player can buy supplies, equipment, items or the like during the game. In addition, the name of the player who earned the largest number of points in a game is usually recorded together with the number of points earned.

However, the game pseudo-values described above have meaning only within the game space in the time duration from a time a player (or players) begins to a time a player ends playing the game. In other words, they can be used only within the game space in which they are earned in the limited time period, and pseudo-values earned in the game cannot be exchanged with other items having value that can be used outside the game space. Furthermore, due to legal restrictions such as the so-called Immoral Businesses Act, the transfer of cash (actual money) among players based on wins and losses in a game in which the game results are expressed in terms of winning and losing is prohibited as a form of gambling. Consequently, because the risks and rewards of winning and losing are measured in terms of pseudo-values that can only be used in the game space, the game feels unrealistic, and fails to generate tension.

**SUMMARY OF THE INVENTION**

With the foregoing in view, an object of the present invention is to provide a video game system that creates feelings of realism and tension when the game is played.

In view thereof, the invention relates to a video game system that has game execution means that allows a player to play a prescribed game via game screens, and that receives and transfers prescribed pseudo-values based on the game results, wherein the system includes storage means that stores, for each player registered using a personal card, player information that includes information regarding virtual money used in the game, first conversion means that performs conversion between the virtual money and real money using a prescribed conversion rate, second conversion means that performs conversion between the virtual money and the prescribed pseudo-values using a prescribed conversion rate, virtual money accumulation means that adds virtual money to the storage area for the player information for the individual player whose player information was stored in the storage means via a personal card, based on the calculation performed by the first conversion means, and game result integration means that converts the amount of increase or decrease in the prescribed pseudo-values that occurs each time the game is executed by the game execution means into virtual money using the second conversion means, performs addition or subtraction of the amount of increase or decrease to or from the amount of the player's current virtual money stored in the storage means, and updates the player information in the storage means.

According to the above invention, player information is stored in the storage means for each player registered using a personal card, conversion is carried out between the virtual money and actual money by the first conversion means using a prescribed conversion rate, and conversion is carried out between the virtual money and the prescribed pseudo-values by the second conversion means using a prescribed conversion rate. Furthermore, virtual money is added by the virtual money accumulation means to the player information area for the individual player whose player information was stored in the storage means via a personal card, based on the calculation performed by the first conversion means. The game result integration means converts the amount of increase or decrease in the prescribed pseudo-values that occurs each time the game is executed by the game execution means into virtual money using the second conversion means, performs addition or subtraction of the amount of increase or decrease to or from the amount of the player's current virtual money stored in the storage means, and updates the player information in the storage means.

Consequently, in this video game system, when the player plays a game, there is no conversion between real money, comprising a currency or the like that is used in the real world, and the prescribed pseudo-values used in the game. Rather, because the pseudo-values that are generated based on the game results are transferred in the form of virtual money that has an exchange rate within the game space, the problem endemic to games that handle prescribed pseudo-values, i.e., the gambling aspect, is eliminated. Moreover, because the virtual money has an exchange rate relative to the pseudo-values in the game space, a game can be provided that generates tension for the player due to the fact that the virtual money is earned or is confiscated based on the game results.

These and other objects, features, and advantages of the present invention will become more apparent upon reading the following detailed description along with the accompanying drawings.

## BRIEF DESCRIPTION OF THE DRAWINGS

Fig. 1 is a schematic drawing showing a video game system pertaining to the present invention;
Fig. 2 is a perspective view of the external appearance of one embodiment of a client terminal device;
Fig. 3 is a hardware construction drawing showing one embodiment of a client terminal device;
Fig. 4 is an example of a function block diagram of the controller of a client terminal device;
Fig. 5 is a perspective view of the external appearance of one embodiment of an arcade-based server device;
Fig. 6 is a hardware construction drawing showing one embodiment of an arcade-based server device;
Fig. 7 is a hardware construction drawing showing one embodiment of a management server device;
Fig. 8 is an example of a function block diagram that includes the management server device of the video game system pertaining to the present invention;
Fig. 9 is an example of a flow chart to explain the basic sequence of the mah-jongg game executed on the video game system pertaining to the present invention;
Fig. 10 is a detailed flow chart that shows an example of the player authentication routine executed by the client terminal device;
Fig. 11 is an example of a screen drawing of a name input screen;
Fig. 12 is an example of a screen drawing of a fingerprint input screen;
Fig. 13 is an example of a screen drawing of a password screen;
Fig. 14 is an example of a screen drawing of a name plate display screen;
Fig. 15 is an example of a flow chart showing an example of the player game entry routine executed by the client terminal device;
Fig. 16 is an example of a screen drawing of a game mode selection screen;
Fig. 17 is an example of a screen drawing of a game mode selection screen;
Fig. 18 is an example of a screen drawing of a table selection screen;
Fig. 19 is an example of a screen drawing of a counter conversion screen;
Fig. 20 is an example of a screen drawing of a counter conversion screen;
Fig. 21 is a flow chart showing one example of the routine executed when a game is executed by the client terminal device;
Fig. 22 is an example of an opponent display screen;
Fig. 23 is an example of a screen drawing of a game play screen;
Fig. 24 is an example of a screen drawing of a game play screen;
Fig. 25 is an example of a screen drawing of a finish order display screen;
Fig. 26 is an example of a screen drawing of an item display screen;
Fig. 27 is an example of a screen drawing of a general personal information display screen;
Fig. 28 is an example of a screen drawing of a winning hand distribution screen;
Fig. 29 is an example of a screen drawing of a game record display screen;
Fig. 30 is an example of a screen drawing of a dragon chips screen;
Fig. 31 is a flow chart showing one example of the routine executed during game result integration by the client terminal device; and
Fig. 32 is an example of a screen drawing of a counter return display screen.

## DESCRIPTION OF THE PREFERRED EMBODIMENTS

The preferred embodiments of the video game system pertaining to the present invention will be described below with reference to the drawings.

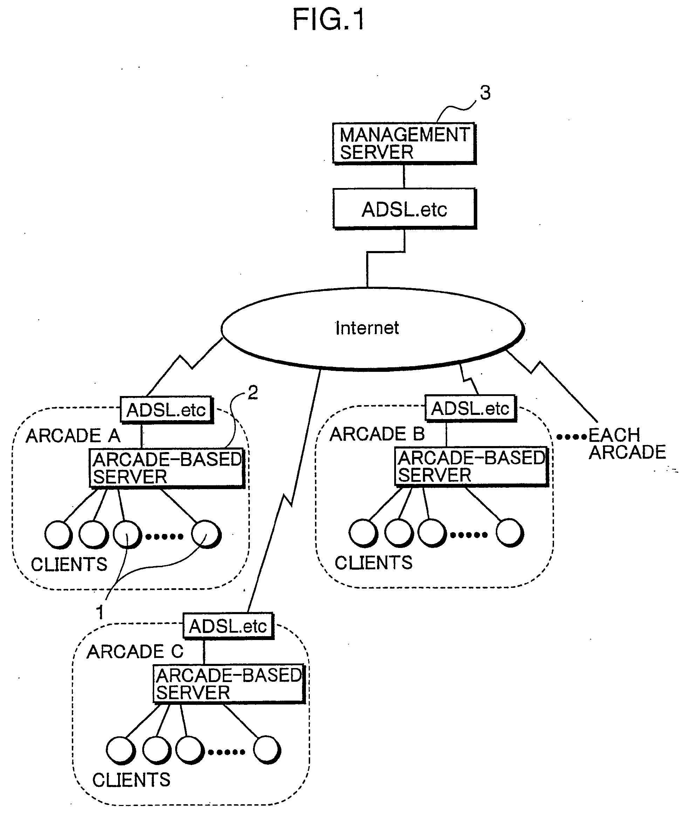

Fig. 1 shows a schematic construction of the video game system pertaining to the present invention. In this embodiment, the video game system comprises client terminal devices 1 that are each equipped with a monitor and have associated identification information, arcade-based server devices 2 that are connected to the client terminal devices 1 in a data-communicable fashion that manage the game that is played by a plurality of players using the client terminal devices 1, and a management server device 3 that is connected to the plurality of arcade-based server devices 2 such that data communication can take place therebetween.

The client terminal devices 1 execute games through the player's execution of prescribed operations based on game screens displayed on the monitor. The identification information assigned to each client terminal device 1 includes identification information pertaining to the arcade-based server device 2 to which the client terminal device 1 is connected (or identification pertaining to the arcade in which the client terminal device is installed), as well as identification information pertaining to the client terminal device 1 within the arcade in which the client terminal device 1 is installed. For example, where the identification information for the arcade A is 'A', and the identification information for the client terminal device 1 within the arcade A is '4', the identification information for that client terminal device 1 is 'A4'.

Four (or eight) client terminal devices 1 are connected to each arcade-based server device 2 in a data-communicable fashion. Each arcade-based server device 2 manages the games executed on the client terminal devices 1 to which it is connected in a data-communicable fashion, and is also connected to the management server device 3, such that it transmits and receives information between the client terminal devices 1 and the management server device 3.

The management server device 3 is connected to the plurality of arcade-based server devices 2 in a data-communicable fashion. It stores player information including player fingerprint characteristic data needed for fingerprint verification described below, as well as the amount of virtual money possessed by each player, in association with the player's user ID, and also transmits and receives data to and from each client terminal device 1 via the applicable arcade-based server device 2.

In the video game system pertaining to the present invention, the client terminal devices 1 may have all of the functions of the management server device 3.

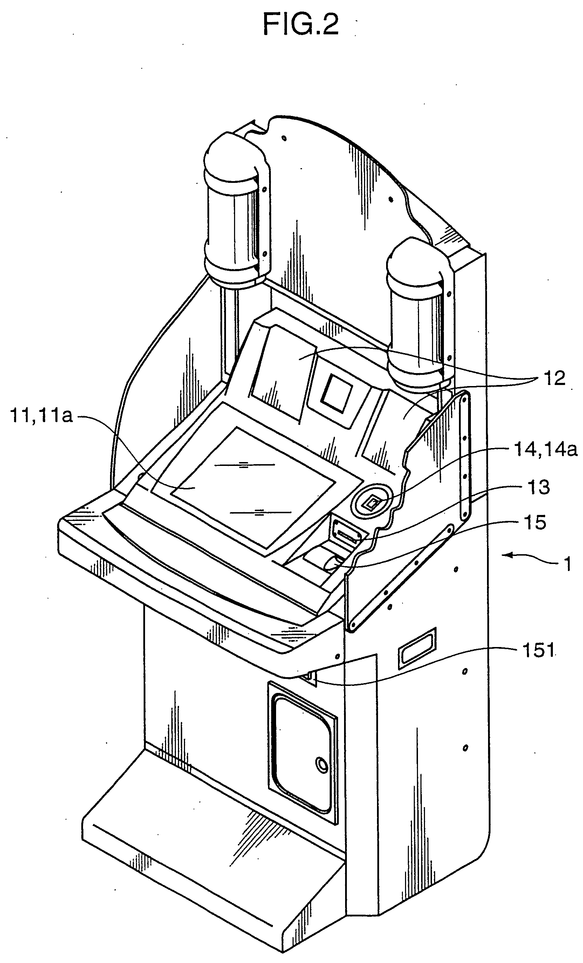

Fig. 2 is a perspective view of the external appearance of one embodiment of the client terminal device 1. In the description below, a commercial video game apparatus that incorporates a monitor is used as an example of the client terminal device 1 for purposes of explanation, but the present invention is not limited to this example, and may be applied in the same fashion to a home video game terminal device comprising a home video game machine connected to a household television, or to a personal computer that functions as a video game terminal device via the execution of a video game program.

Moreover, in this embodiment, the game played using the client terminal device 1 pertaining to the present invention is a mah-jongg game, wherein the player who operates a client terminal device 1 plays against at least one of (i) players using other client terminal devices 1 or (ii) virtual players implemented by the CPU of the player's own apparatus. When the player is competing against players using other client terminal devices 1, data is transmitted and received among the client terminal devices 1 via network communication units 18 described below.

The client terminal device 1 includes a monitor 11 that displays the game screens, a touch panel 11a that determines, based on the addresses of the buttons that prompt selections or the like that are shown on the game screens of the monitor 11 and the location at which pressure was applied by the player, which of the buttons was pressed, a speaker 12 that outputs sound, a card reader 13 that reads information such as a user ID stored in a personal card, a fingerprint verification unit 14 that extracts characteristic data needed for personal authentication based on fingerprint information from a CCD camera 14a described below, and a coin receiving unit 15 that receives coins inserted by the player. The characteristic data extracted by the fingerprint verification unit 14 is stored in the management server device 3 via the network communication unit 18 described below, the arcade-based server device 2 and the network.

The monitor 11 is a thin liquid crystal display, for example, that displays images. The speaker 12 outputs prescribed messages or BGMs. The fingerprint verification unit 14 includes a CCD camera 14a that performs imaging of the player's fingerprints. A different type of digital imaging device (such as a CMOS camera) may be used in place of the CCD camera 14a. The coin receiving unit 15 includes a coin ejection outlet 151 from which invalid inserted coins are ejected.

While not shown in the drawings, the personal card is a magnetic card or IC card that stores personal information such as a user ID, and the card reader 13 enables information to be read from the personal card housed therein.

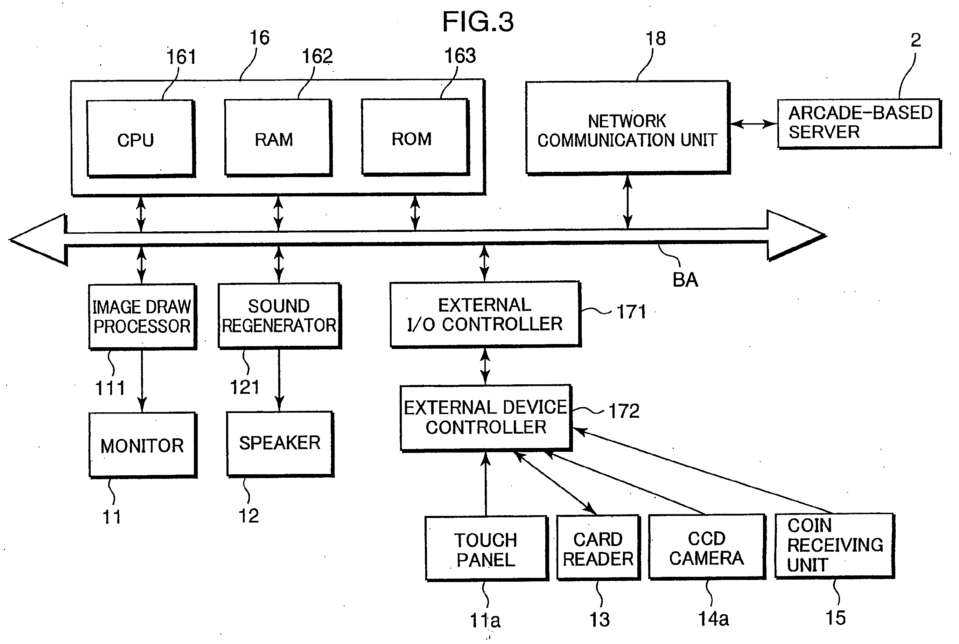

A controller 16 (see Fig. 3) comprising a microcomputer or the like that inputs detection signals from the various components and outputs control signals to the various components is located at an appropriate location in the client terminal device 1.

Fig. 3 is a hardware construction drawing showing one embodiment of the client terminal device 1. The controller 16 controls the overall operation of the client terminal device 1, and includes a central processing unit (CPU) 161, a RAM 162 that temporarily stores information during the execution of processing, and a ROM 163 in which prescribed image information as well as game programs and the like described below are stored beforehand.

An external I/O controller 171 is located between the controller 16 and the detection units including the card reader 13, the touch panel 11a and the CCD camera 14a (equivalent to the fingerprinting means). It converts detection signals into digital signals for processing, as well as converts instruction information into control signals, outputs the digital signals or control signals to the controller 16 or to the various detection units, and conducts this signal processing and I/O processing using time division, for example. The external device controller 172 outputs control signals to the various detection units and inputs detection signals from the various detection units during their respective time division periods.

The image draw processor 111 displays necessary images on the monitor 11 in accordance with image display instructions from the controller 16, and includes a video RAM. The sound generator 121 outputs to the speaker 12 prescribed messages or BGMs in accordance with instructions from the controller 16.

The touch panel 11a is a thin rectangular member that (i) comprises touch-sensitive elements composed of a linear transparent material that are aligned horizontally and vertically according to a prescribed pitch, and (ii) is covered by a transparent cover, and is affixed to the screen surface of the monitor 11. The touch panel 11a may comprise a public-domain technology. For example, a construction may be used in which pressure-sensitive conductive ink, such as an ink comprising thermoplastic resin in which conductive particles and nonconductive particles are dispersed together, is printed at corresponding positions on the facing sides of two opposing flexible rectangular film substrates, and the film substrates are then glued together. In addition, insulated lead wires leading from each pressure-sensitive conductive ink member protrude outside each film substrate. A prescribed voltage is applied to the lead wires for one film substrate, and a voltage detection circuit is connected to the lead wires for the other film substrate in such a manner that each lead wire can be recognized. The contact surfaces of the touch-sensitive conductive, ink members of the glued-together film substrates have minute protrusions and indentations (caused by printing and by the presence of minute particles), and when pressure is applied to the film substrate surface by the player's finger (or by a pressure pen or the like), the effective relative areas of contact of the ink member surfaces changes, i.e., the resistance on the contact surfaces changes, and the voltage appearing on the side of the other set of lead wires can be detected in an analog fashion. In this way, the position at which pressure is applied can be detected. Consequently, it can be determined, based on the addresses of the buttons that prompt selections or the like that are shown on the game screens of the monitor 11 and the location at which pressure was applied by the player, which of the buttons was pressed.

Mah-jongg tile characters, background images, images for the various screens and the like are stored in the ROM 163. The mah-jongg tile characters and the like comprise an appropriate number of constituent polygons such that they can be drawn in a three-dimensional fashion, and the image draw processor 111 performs, based on image draw instructions from the CPU 161, processing for calculation to convert positions in a three-dimensional space into positions in a pseudo-three-dimensional space and light source calculation, as well as processing for the writing of the image data to be drawn to the video RAM based on these calculation results, i.e. processing for the writing (pasting) of texture data to the area of the video RAM specified using polygons, for example.

The relationship between the operation of the CPU 161 and the operation of the image draw processor 111 will now be described. The CPU 161 reads out from the ROM 163 images, sounds, control program data and game program data based on the operating system (OS) stored in the ROM 163, which may comprise either an internal ROM or part of an external, detachable apparatus. All or part of the read-out images, sounds, control program data and the like are saved in the RAM 162. Processing is then performed by the CPU 161 based on the control program and various data (image data such as polygons and texture for displayed objects and other character images, as well as sound data) stored on the RAM 162, as well as on detection signals from the detection units. In other words, based on detection signals and the like, the CPU 161 generates appropriate commands for the tasks of image draw and sound output. The image draw processor 111 performs calculation to determine the viewpoint, the positions of characters in a three-dimensional space (the same naturally applies in the case of a two-dimensional space) relative to this viewpoint and the light source, as well as processing for the generation and processing of sound data. Next, the CPU 161 executes, based on the results of the calculations above, processing to write to the video RAM the image data to be drawn. The image data written to the video RAM is supplied to the monitor 11 (after it is supplied to a D/A converter via an interface and converted into analog image signals), and is displayed as images on the screen thereof. At the same time, the sound data output from the sound generator 121 is output as sounds from the speaker 12 (after it is supplied to a D/A converter via an interface and converted into analog sound signals and amplified).

The image draw commands comprise image draw commands to draw three-dimensional images using polygons and image draw commands to draw normal two-dimensional images. These polygons are multi-sided two-dimensional images, and in this embodiment, triangular or rectangular shapes are used. The image draw commands to draw three-dimensional images using polygons comprise polygon vertex address data, texture address data indicating the storage address of the texture data to be pasted to the polygon, color palette address data indicating the storage address of the color palette data indicating the color of the texture data, and brightness data indicating the brightness of the texture, all of which are read out from the ROM 163. One character (or object) comprises a number of polygons. The CPU 161 stores the three-dimensional space coordinate data for each polygon in the RAM 162. Where characters or the like are to be moved on the screen of the monitor 11, the processing described below is executed.

The CPU 161 sequentially seeks three-dimensional coordinate data for each polygon after movement and rotation thereof based on the three-dimensional coordinate data for the vertices of each polygon, as well as the data for the amount of movement and rotation of each polygon, all of which data is temporarily stored in the RAM 162. Of the three-dimensional coordinate data for each polygon sought in this fashion, the horizontal and vertical coordinate data is supplied to the image draw processor 111 as RAM 162 display area address data, i.e., as polygon vertex address data. The image draw processor 111 writes texture data indicated by the previously-assigned texture address data to the triangle or rectangle display area indicated by three or four items of polygon vertex address data. In this way, characters (or objects) comprising a number of polygons to which texture data has been pasted are displayed on the display screen of the monitor 11.

Among the various types of data stored in the ROM 163, data that can be stored on a detachable recording medium can be read using a driver of a hard disk drive, an optical disk drive, a flexible disk drive, a silicon disk drive, a cassette reader or the like, and in this case, the recording medium may comprise, for example, a hard disk, optical disk, flexible disk, CD, DVD, semiconductor memory or the like.

The network communication unit 18 enables the transmission and receipt of various types of event information generated during the playing of the mah-jongg game to and from the arcade-based server device 2 (or the management server device 3) over a network.

The personal authentication method implemented by the video game device 1 will now be described. Personal authentication confirms that the player who is recognized by the client terminal device 1 (or the management server device 3 not shown in the drawing that is connected via the network communication unit 18 and the network) is in fact the same player who is actually playing. Where a player wishes to play on the client terminal device 1 for the first time, the card reader 13 reads out user ID data from the personal card inserted therein, the CCD camera 14a of the fingerprint verification unit 14 images the player's fingerprint, and characteristic data necessary for personal authentication is extracted using the fingerprint information from the CCD camera 14a.

The user ID data and characteristic data are then transmitted via the network communication unit 18 and the network to the arcade-based server 2 to which the client terminal device 1 is connected, and are then transmitted from the arcade-based server 2 over a network such as the Internet to the management server device 3, and are stored therein. The player is thereby registered with the management server device 3. Where a player already registered with the management server device 3 wishes to play on the client terminal device 1, the card reader 13 reads out user ID data from the personal card inserted therein, the CCD camera 14a of the fingerprint verification unit 14 images the player's fingerprint, and characteristic data necessary for personal authentication is extracted using the fingerprint information from the CCD camera 14a. The user ID data and characteristic data are then transmitted to the management server device 3 via the network communication unit 18, the network and the arcade-based server 2, and the player authentication unit 361a of the management server device 3 determines whether or not the characteristic data corresponding to the user ID stored therein is identical to the transmitted characteristic data. If the determination is affirmative, play is permitted, while if the determination is negative, play is denied (for example, an error message is displayed on the monitor 11 of the client terminal device 1 and the user is prompted to re-attempt fingerprint verification).

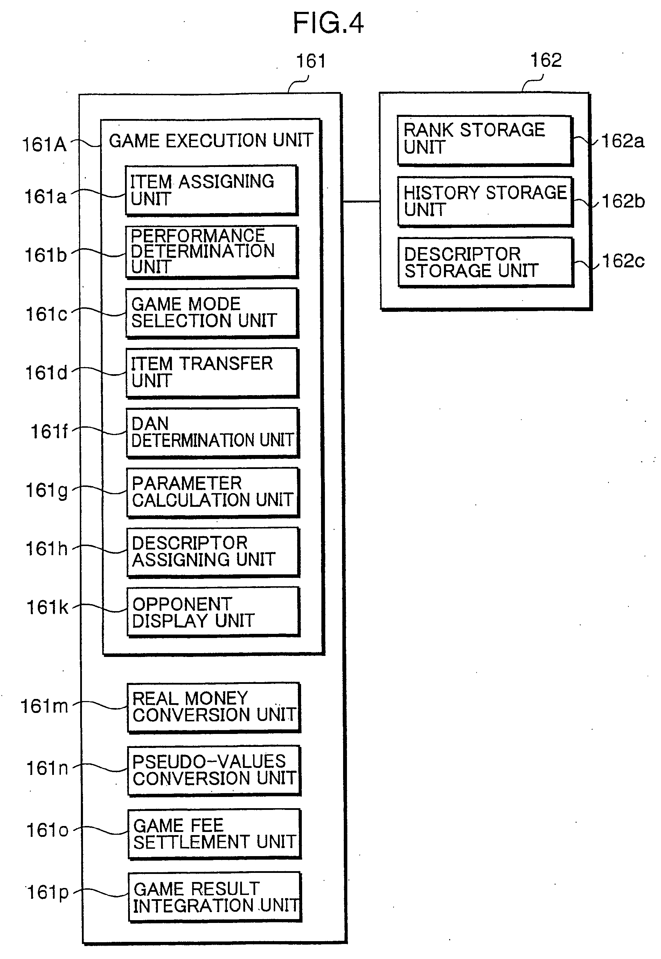

Fig. 4 is a function block diagram pertaining to the controller 16 of the client terminal device 1. The CPU 161 of the controller 16 includes a game execution unit 161A that runs the mah-jongg game based on operation instructions from the player, a real money conversion unit 161m (equivalent to the first conversion means), a pseudo-values conversion unit 161n (equivalent to the second conversion unit), a game fee settlement unit 161o (equivalent to the game fee settlement means), and a game result integration unit 161p (equivalent to the game result integration means).

The game execution unit 161A includes an item assigning unit 161a that virtually assigns a prescribed number of items to players who satisfy prescribed conditions, a game mode selection unit 161c that, when a game is begun, displays a plurality of options for the type (mode) of game and receives selection input from the player, a performance determination unit 161b that, when a game ends, determines the order in which the players finished in that game, an item transfer unit 161d that, based on the results of the determination by the performance determination unit 161b and the number of deals selected by the game mode selection unit 161c, transfers among players a prescribed number of items from among the items virtually possessed by the players, a rank determination unit 161f that determines a rank indicating the level of a player's skill at mah-jongg based on the number of items virtually possessed by the player, a parameter calculation unit 161g that calculates parameters indicating the characteristics of each player's games based on the history data stored in the history storage unit 162b described below, a descriptor assigning unit 161h that assigns a descriptor applicable during games to each player based on the calculated parameters, and an opponent display unit 161k that displays on a game screen at least the rank or the descriptor of each opponent.

The RAM 162 of the controller 16 includes a rank storage unit 162a that associates a number of items and a rank with each player and stores them in memory, a history storage unit 162b that stores past game history data for each player, and a descriptor storage unit 162c that associates the descriptor assigned by the descriptor assigning unit 161h with each player and stores it in memory.

Furthermore, the RAM 162 of the controller 16 stores data regarding the current amount of virtual money possessed by the player permitted to join a game, associates the virtual money amount calculated based on the game fee and the game result with the player, and stores this amount. These items of data are updatably stored in the RAM 162 in accordance with the progress of the game through the transmission and receipt thereof to and from the management server device 3 via the network communication unit 18, the arcade-based server 2 and the network.

The real money conversion unit 161m performs conversion of the coins received via the coin receiving unit 15 and virtual money using a prescribed exchange rate. The prescribed exchange rate here is a rate used in order to perform conversion between virtual money and real money. In this embodiment, 10,000 virtual money units is equivalent to one coin, but this exchange rate is arbitrary, and the exchange rate may be set such that 10,000 virtual money units is equivalent to two coins. This conversion rate data is stored beforehand in a prescribed storage area of the RAM 162 or the like, and when game execution is begun by the game execution unit 161A (in this embodiment, when the game begins), this conversion rate data is read out and conversion from real money into virtual money is performed by the real money conversion unit 161m.

The pseudo-values conversion unit 161n performs conversion between the prescribed pseudo-values used in the mah-jongg game (in this embodiment, such values comprise counters) and virtual money, using a prescribed exchange rate. The prescribed exchange rate here is a rate that is used to perform conversion between the pseudo-values used in the game space and virtual money. In this embodiment, 25,000 virtual money units is equivalent to 25,000 points comprising counters or pseudo-values, but this exchange rate is also arbitrary, and may be set such that 25,000 counters represented by points is equivalent to 100,000 virtual money units. This conversion rate data is stored beforehand in a prescribed storage area of the RAM 162 or the like, and when game execution is finished (in this embodiment, after the game is completed), this conversion rate data is read out and conversion into virtual money or into counters represented by points is performed by the pseudo-values conversion unit 161n.

The game fee settlement unit 161o converts the game fee to be paid each time the game is executed by the game execution unit 161A into a prescribed amount of virtual money using the pseudo-values conversion unit 161n, subtracts the amount of virtual money obtained as a result of the conversion and representing the game fee required for the player to join a game from the current amount of virtual money possessed by the player, which is stored in the player information storage unit 371 of the management server device 3, and updates the player information stored in the player information storage unit 371. The game fee here is the fee that is virtually paid within the game space using virtual money when the player plays a game, and may be considered, for example, a facility fee for using the facility where the player plays the virtual game.

The game result integration unit 161p converts the amount of increase or decrease in counters represented by points (pseudo-values) that occurs each time the game is executed by the game execution unit 161A into virtual money using the pseudo-values conversion unit 161n, performs addition or subtraction of the amount of increase or decrease in the counters represented by points that occurred during the game played by the player, now represented in the form of virtual money, to or from the amount of the player's current virtual money stored prior to the commencement of the game in the player information storage means 371, and updates the player information stored in the player information storage unit 371 accordingly.

The item assigning unit 161a virtually assigns items ('dragon chips' in this embodiment) to players who satisfy prescribed conditions, increases or reduces the number of points virtually possessed by the players, and associates with each player and stores in the rank storage unit 162a the number of items and points corresponding to each player. The method by which the number of points is increased or decreased and the conditions for the assignment of items will now be described specifically. During the game, when a player wins, the number of points virtually possessed by the player is increased by a prescribed number, and when the player loses on 'furikomi', i.e., on his own discard, the number of virtually possessed points is reduced by a prescribed amount. For example, where the player wins, the number of points obtained for winning is increased by 20 points for every 1000 points possessed. Where the player loses on his own discard, the number of points possessed by the player is reduced by 10 points for every 1000 points in his score. Where the number of points is 1000 or higher, three items, i.e., dragon chips, are virtually assigned.

When the game comprising the number of deals selected by the game mode selection unit 161c has been completed, the performance determination unit 161b determines the order of the players' finish, with the first-place finisher being the player who virtually possesses, as counters, the largest number of points. However, the number of points possessed as counters by each player when the game begins (referred to as the 'starting points') is identical. For example, the starting points figure is 15,000 points in a 'One deal' game, 20,000 points in an 'One round' game, and 25,000 in a 'Two rounds' game.

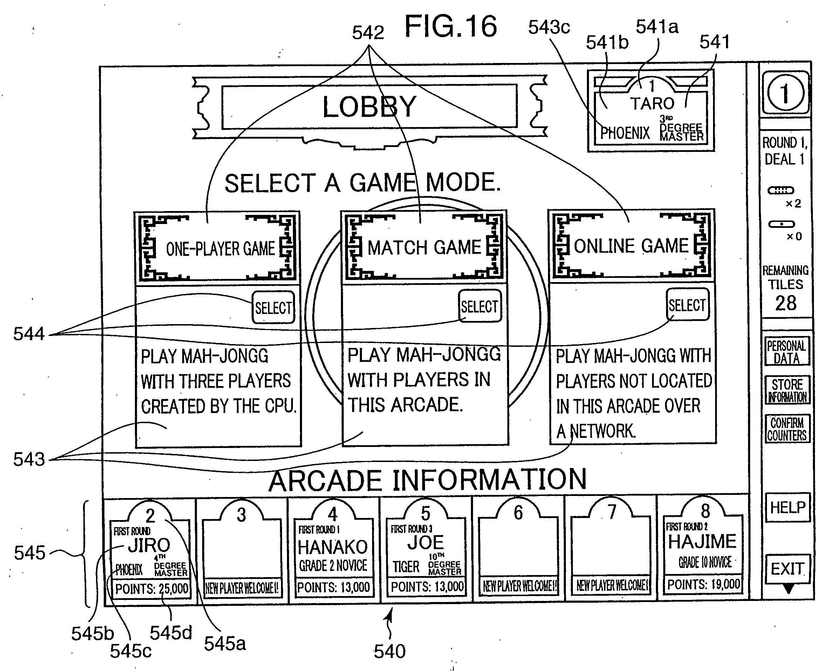

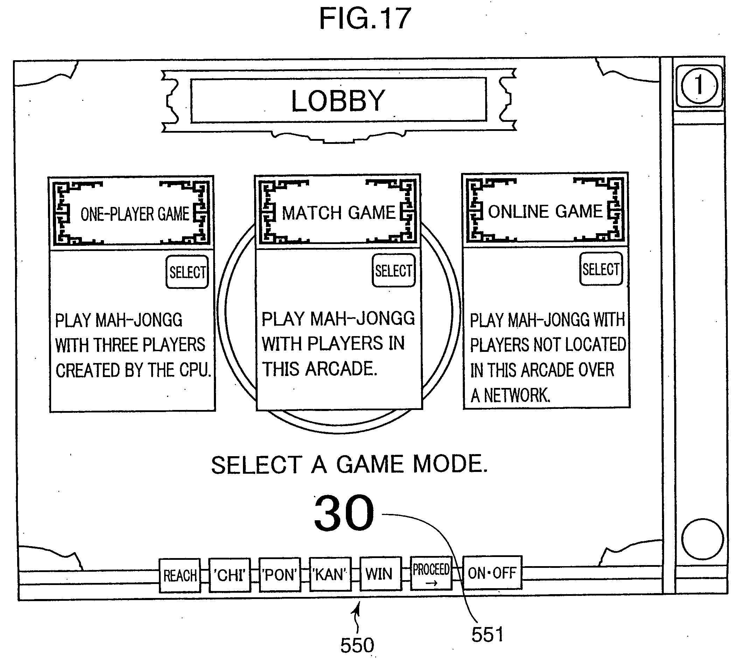

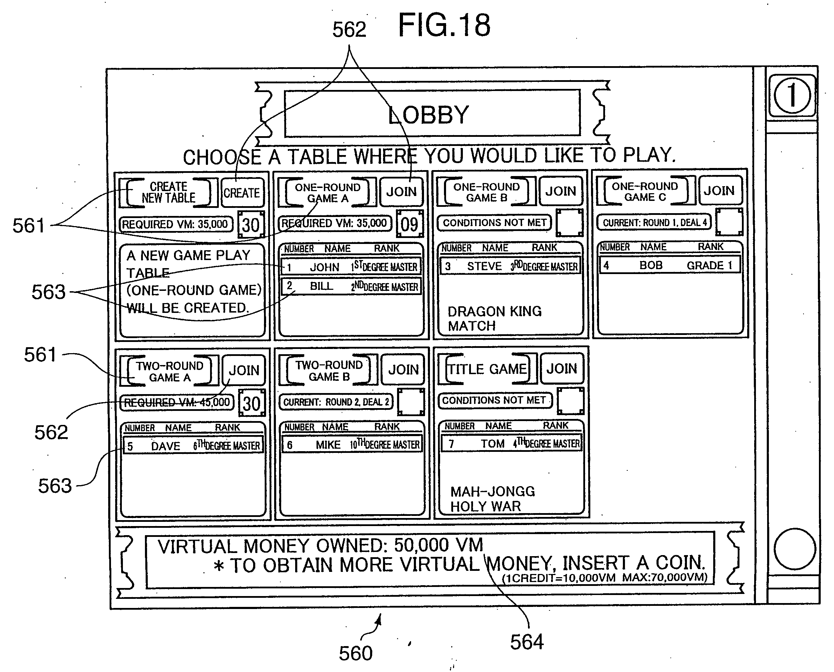

When a game begins, the game mode selection unit 161c displays a game mode selection screen 540 or 550 (see Figs. 16 and 17) and a table selection screen 560 (see Fig. 18), receives selection input from the player, and determines the game mode and the number of deals in the game. Specifically, the game mode selection unit 161c determines one from among the modes of 'One-player game' (played against the CPU), 'Match game' (played in the arcade) or 'Online game' displayed on the game mode selection screen 540 or 550, and then determines the number of deals to be played from among 'One deal', 'One round' and 'Two rounds'. In other words, the game mode selection unit 161c determines the number of deals from among '1' (one deal), '4' (one round) or '8' (two rounds), via the selection of a table through receipt of player selection input from the table selection screen 560, and selects the opponents. However, the tables selectable by the player are preset in accordance with the rank of the player. In this embodiment, there are tables at which players who are at or above '1st degree master' rank play (this type of game is called a 'master level game') as well as tables at which players who are at or below 'Grade 1' rank play (this type of game is called a 'novice level game'). If the player is at or above '1st degree master' rank, he is permitted to select a master level game table, while if the player is at or below Grade 1 rank, he is permitted to select a novice level game table. The game mode selection unit 161c associates the identification information for the client terminal devices 1 being played by the opponents selected in this way, and stores the players' names, ranks and descriptors and the table name in the RAM 162. Here, the table name is a name assigned to each table, and consists of a name by which the number of deals can be determined, such as 'Two-Round Game A', for example.

After the order of finish of the players in the game is determined by the performance determination unit 161b, the item transfer unit 161d transfers among the players a prescribed number of items from among the items virtually possessed by the players, based on the results of the determination by the performance determination unit 161b and the number of deals selected by the game mode selection unit 161c. Specifically, in a 'One deal' game, dragon chips are not transferred, in a 'One round' game, one dragon chip is transferred from the fourth-place finisher to the first-place finisher, and in a 'Two rounds' game, two dragon chips are transferred from the fourth-place finisher to the first-place finisher and one dragon chip is transferred from the third-place finisher to the second-place finisher. In addition, where a virtual tournament or the like is held, the number of dragon chips transferred can be increased beyond the numbers described above, thereby whetting the player's desire to participate in the tournament. Furthermore, the item transfer unit 161d stores the number of dragon chips in rank storage means 162a described below on a continuously updated basis.

The rank determination unit 161f determines a rank indicating the level of the player's skill at mah-jongg based on the number of items virtually possessed by the player. The method used to determine this rank will now be described in specific terms below.

A player is assigned a rank of Grade 10 when he plays the game for the first time. The rank becomes Grade 9 when the player's number of points is between 100 and 199, for example. As the player's point total rises (or falls) his rank is increased (or decreased) accordingly, such that where the player possesses between 900 and 999 points, he becomes a Grade 1 player, for example. Once the player reaches 1000 points, he becomes a 1st degree master.

As described above, the item assigning unit 161a virtually assigns three items, i.e., dragon chips, to a player who attains 1000 points. Thereafter, the number of dragon chips virtually possessed by each player fluctuates depending on the transfers among the players of their dragon chips by the item transfer unit 161d based on the results of the determinations by the performance determination unit 161b and the number of deals selected by the game mode selection unit 161c, and is stored on a continuously updated basis in the rank storage means 162a described below. For example, a player who has five or more but fewer than 10 dragon chips is deemed a 2nd degree master. As the player's number of dragon chips rises (or falls), his rank is increased (or decreased) accordingly, and a player who possesses 46 or more dragon chips is deemed an 8th degree master. Where a player who has attained 1st degree master rank has no dragon chips (or a negative number thereof) as a result of game play, he is demoted to Grade 1 rank.

In other words, the rank determination unit 161f determines the appropriate rank with reference to level tables that associate a given number of points or items with a rank and are stored in table format, based on the number of points determined by the item assigning unit 161a and the number of items determined by the item assigning unit 161a and the item transfer unit 161d.

When a player is determined by the rank determination unit 161f to be at 1st degree master rank, the parameter calculation unit 161g calculates parameters indicating the characteristics of the player's games based on the history data stored in the history storage unit 162b described below. These parameters include the 'win ratio', 'furikomi ratio', 'average number of dora tiles held on win' and 'average number of exponentials held on win'.

$$\text{(Win ratio)} = \text{(Cumulative number of deals won)} / \text{(Cumulative}$$

$$\text{number of deals played)}$$

$$\text{(Furikomi ratio)} = \text{(Cumulative number of furikomi losses)} /$$

$$\text{(Cumulative number of deals played)}$$

$$(\text{Average number of dora tiles held on win}) = (\text{Cumulative number}$$

$$\text{of dora tiles held when winning a deal}) / (\text{Cumulative number of}$$

$$\text{deals won})$$

$$(\text{Average number of exponentials held on win}) = (\text{Cumulative number}$$

$$\text{of exponentials when winning a deal}) / (\text{Cumulative number of}$$

$$\text{deals won})$$

The cumulative number of deals won, cumulative number of furikomi losses, cumulative number of deals played, cumulative number of dora tiles held when winning a deal, cumulative number of exponentials when winning a deal and cumulative number of deals won, which are used in the formulae described above, are associated with each player and are stored in the history storage unit 162b described below.

When a player is determined by the rank determination unit 161f to be at 1st degree master rank, a descriptor applicable during games is virtually assigned to the player and associated with the player's name by the descriptor assigning unit 161h based on the parameters calculated by the parameter calculation unit 161g, and is stored in the descriptor storage unit 162c.

The method by which a descriptor is assigned will now be described in detail. A level is set in association with a numerical value for each parameter. For example, where the win ratio is 0.31, the win ratio level is 6, while where the 'furikomi' ratio is 0.125, the 'furikomi' ratio level is 7. The descriptor assigning unit 161h first determines the levels regarding win ratio, 'furikomi' ratio, average number of 'dora' tiles and average number of exponentials based on a level determination table not shown. The descriptor corresponding to the highest-level parameter is then assigned. Where the win ratio level is the highest, the player is determined to be a 'quick win' type of player and is assigned the descriptor of 'phoenix'. Where the 'furikomi' ratio level is the highest, the player is determined to be a 'defense-first' type player and is assigned the descriptor of 'turtle'. Where the average number of 'dora' tiles level is highest, the player is determined to be a luck-dependent type player and is assigned the descriptor of 'dragon'. Where the average number of exponentials level is highest, the player is determined to be an attack-minded player and is assigned the descriptor of 'tiger'. Each descriptor indicates the name of a character that conveys an image of the player's characteristic game style (such as a 'quick win' approach).

The opponent display unit 161k reads out the rank and descriptor of each opponent from the opponent data stored in the RAM 162, and displays them on a game screen in association with the opponent's name. In other words, it displays on a game screen the name, rank and descriptor of each of the four competitors, including the player.

The rank storage unit 162a associates with each player's name the number of items, which is assigned by the item assigning unit 161a and changed by the item transfer unit 161d, as well as the rank determined by the rank determination unit 161f, and stores these values in memory.

The history storage unit 162b stores as past game history data for each player the cumulative number of wins, i.e., the cumulative number of deals won by the player, the cumulative number of 'furikomi', i.e., the cumulative number of times the player has lost on his own discard, the cumulative number of deals played, the cumulative number of 'dora' tiles, i.e., the cumulative number of 'dora' tiles contained in the player's hand when the player has won, the cumulative number of exponentials, i.e. the cumulative number of 'fan' contained in the player's hand when the player has won, and the cumulative number of wins, i.e. the cumulative number of wins that have occurred.

The descriptor storage unit 162c associates with each player's name and stores the parameter values calculated by the parameter calculation unit 161g and the descriptor that is assigned to the player by the descriptor assigning unit 161h.

The arcade-based server device 2 used in the video game system pertaining to the present invention will now be explained.

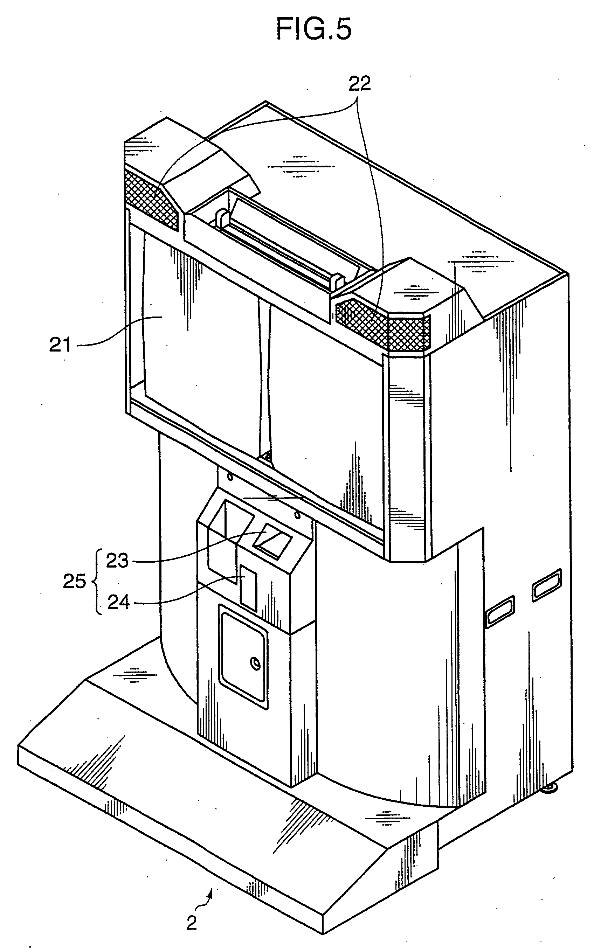

Fig. 5 is a perspective view of the external appearance of one embodiment of the arcade-based server device 2 pertaining to the present invention. The arcade-based server device 2 includes a monitor 21 that displays game screens and the like, a speaker 22 that outputs sounds, and a personal card vending machine 25 that receives coins inserted by players and sells personal cards.

In order to make images large and easy to see for the players, the monitor 21 is equipped with two cathode ray tubes, for example. The two cathode ray tubes are arranged such that the longer edges of their roughly rectangular image display areas that display their respective images are aligned with each other, and image signal control is performed such that the two image display areas display a single image.

The speaker 22 outputs prescribed messages and BGMs. The personal card vending machine 25 includes a coin receiving unit 24 that receives coins inserted by the player and a card expulsion outlet 23 that expels the personal card. The coin receiving unit 24 also includes a coin ejection outlet (not shown in the drawings) that ejects inserted coins that are counterfeit, defective or otherwise unusable.

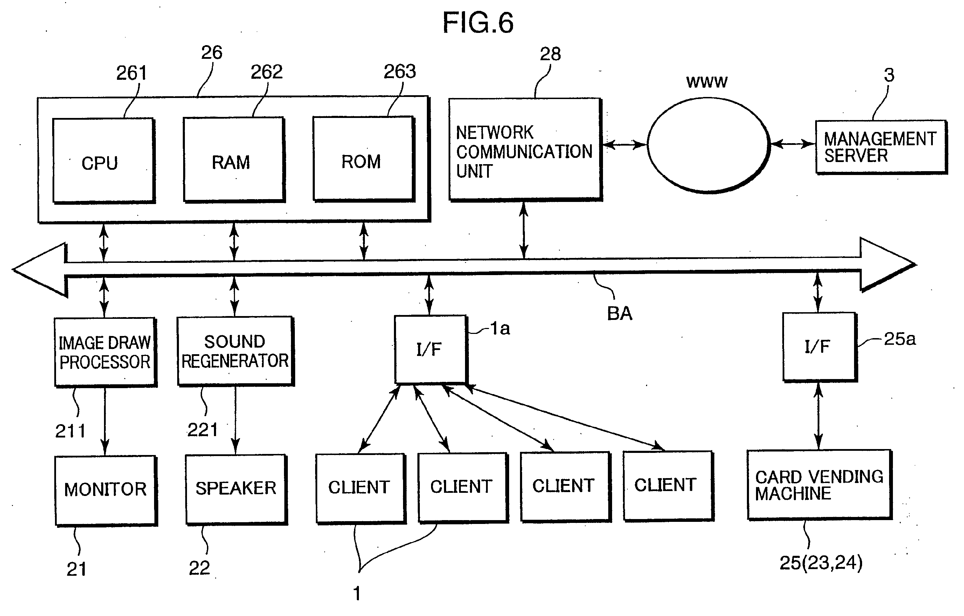

A controller 26 (see Fig. 6 discussed below) comprising a microcomputer or the like that inputs detection signals from and outputs control signals to the various system components is located at an appropriate location within the arcade-based server device 2.

The hardware construction of an embodiment of the arcade-based server device 2 will now be described. Fig. 6 is a hardware construction drawing showing one embodiment of the arcade-based server device 2. The controller 26 controls the overall operation of the arcade-based server device 2, and includes a central processing unit (CPU) 261, a RAM 262 that temporarily stores information during the execution of processing, and a ROM 263 in which prescribed image information and other data are stored in advance.

The image draw processor 211 displays necessary images on the monitor 21 in accordance with image display instructions from the controller 26, and includes a video RAM. The sound generator 221 outputs to the speaker 22 prescribed messages or BGMs in accordance with instructions from the controller 26.

Among the various types of data stored in the ROM 263, data that can be stored on a detachable recording medium can be read using a driver of a hard disk drive, an optical disk drive, a flexible disk drive, a silicon disk drive, a cassette reader or the like, and in this case, the recording medium may comprise, for example, a hard disk, optical disk, flexible disk, CD, DVD, semiconductor memory or the like.

The network communication unit 28 enables the transmission and receipt of various types of data to and from the management server device 3 over a network such as World Wide Web (WWW) or the like. An interface unit 1a enables transmission of data between the plurality of (for example, four) client terminal devices 1 connected to the arcade-based server 2 and the management server device 3.

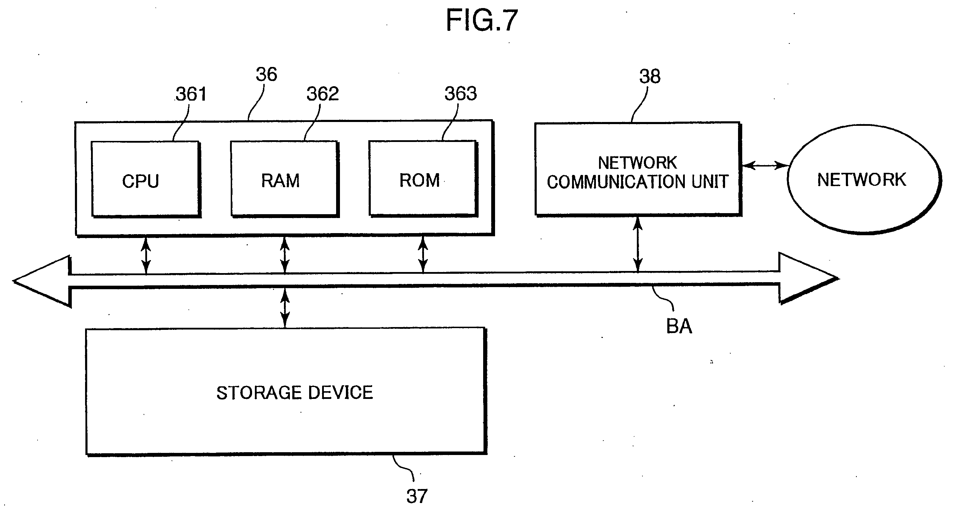

The hardware construction of an embodiment of the management server device 3 will now be described. Fig. 7 is a hardware construction drawing of an embodiment of the management server device 3. The management server device 3 includes a controller 36, an external storage apparatus 37 and a network communication unit 38. The controller 36 controls the overall operation of the management server device 3, and includes a central processing unit (CPU) 361, a RAM 362 that temporarily stores information during the execution of processing, and a ROM 363 in which prescribed image information and other data are stored in advance.

Among the various types of data stored in the ROM 363, data that can be stored on a detachable recording medium can be read using a driver of a hard disk drive, an optical disk drive, a flexible disk drive, a silicon disk drive, a cassette reader or the like, and in this case, the recording medium may comprise, for example, a hard disk, optical disk, flexible disk, CD, DVD, semiconductor memory or the like.

The network communication unit 38 enables the transmission and receipt of various types of data to and from the arcade-based server device 2 and the client terminal devices 1 over a network such as WWW.

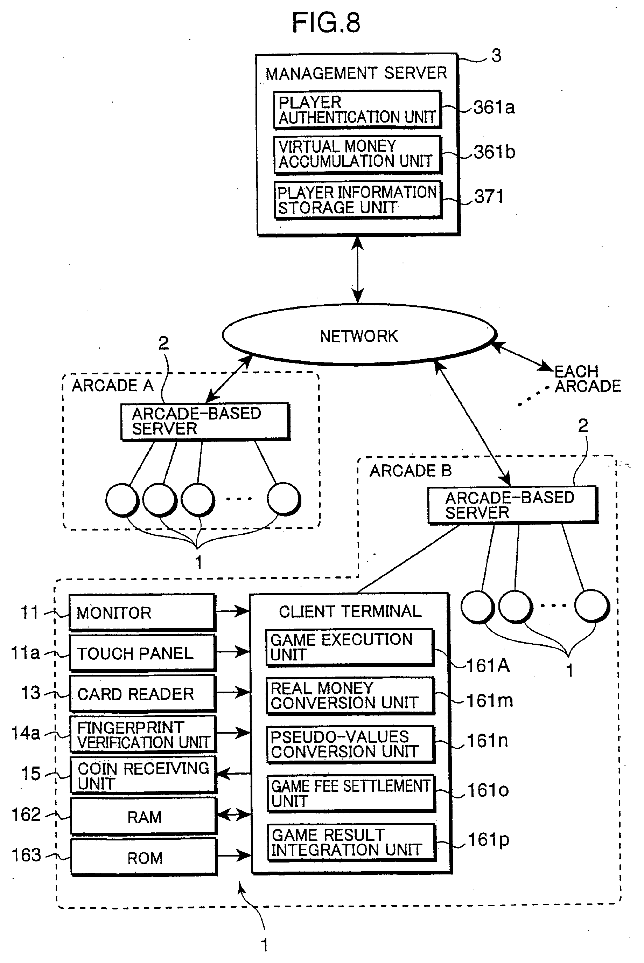

Fig. 8 is an example of a function block diagram of the video game system pertaining to the present invention, including the management server device 3. The reference numbers of the various components used in Fig. 8 correspond to those used in the function block diagrams for the client terminal device 1, the arcade-based server device 2 and the management server device 3 described above.

As shown in Fig. 8, the CPU 361 of the controller 36 described with reference to Fig. 7 includes a player authentication unit 361a (equivalent to the authentication means) that determines whether or not the player is permitted to join a game by performing authentication to determine whether or not the player received from a client terminal device 1 is a registered player, as well as a virtual money accumulation unit 361b (equivalent to the virtual money accumulation means) that adds the amount of virtual money calculated by the real money conversion unit 161m of the client terminal device 1 to the player information storage area for the player, which is stored in the player information storage unit 371 described below.

The player authentication unit 361a determines whether or not a player is permitted to join a game by performing authentication to determine whether or not a player received from a client terminal device 1 via the arcade-based server device 2, the network and the network communication unit 38 is a registered player. This player authentication unit 361a, using the user ID data on the personal card received via the card reader 13 of the client terminal device 1 and the player fingerprint information extracted from the CCD camera 14a (equivalent to the fingerprinting means) of the fingerprint verification unit 14 of the client terminal device 1, receives characteristic data needed for individual player authentication together with user ID data from the client terminal device 1 via the arcade-based server device 2, the network and the network communication unit 38. The player authentication unit 361a then determines whether or not the characteristic data thus received matches the characteristic data for a player that corresponds to the user ID and is stored in the player information storage unit 371 in advance, and where this determination is affirmative, play is permitted (i.e., the player is permitted to join a game), and where the determination is negative, play is refused.

The storage device 37 comprising a hard disk drive device or the like includes a player information storage unit 371 (equivalent to the storage means) that stores player information including personal data for each player, as shown in Fig. 8. The player information storage unit 371 associates with each player and stores user ID data used to identify the personal card possessed by the player, the characteristic data needed to authenticate the individual player using the player's fingerprint information extracted from the CCD camera 14a of the fingerprint verification unit 14, virtual money data and the like. It is also acceptable if, other than the characteristic data described above, a password or player retina information is stored in the player information storage unit 371 as information needed for individual player authentication.

The current amount of virtual money earned, the cumulative amount of virtual money earned for each player, the cumulative number of coins inserted, and data regarding the amount of virtual money accumulated is stored for each player as virtual money data in the player information storage unit 371. In addition, as personal information for each player, each player's personal user ID, the date of each player's registration and the date of each player's most recent system access, as well as the player's name (the name input when the player registered) and character data, which comprises information needed to perform authentication, are stored in the player information storage unit 371.

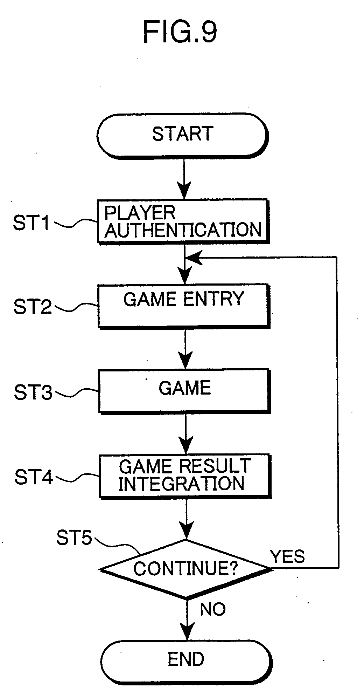

The basic sequence of the mah-jongg game executed in the video game system pertaining to the present invention will now be described. Fig. 9 is an example of a flow chart describing the basic sequence of the mah-jongg game executed in the video game system pertaining to the present invention.

First, a player who has bought a personal card from the arcade-based server device 2 carries out individual player authentication via the personal card in order to play the mah-jongg game using the client terminal device 1 (step ST1). Where the player is authenticated as a registered player and permitted to join a mah-jongg game, (or where the player has registered if it is the player's first time to join a game), the player selects a desired game mode and enters a game (step ST2). When this is done, the player pays in virtual money a game fee (a facility fee and counter rental fee) to join the game. The mah-jongg game corresponding to the game mode selected by the player is then played (step ST3). The amount of virtual money possessed by each player is increased or decreased in accordance with the point counters possessed by the player when the game results are known, and is stored for each player (step ST4). Where the player wishes to play another mah-jongg game (YES in step ST5), step ST2 is returned to and the above processes are repeated. Where the player does not wish to play another mah-jongg game (NO is step ST5), the series of processes executed by the video game system with respect to that player is ended.

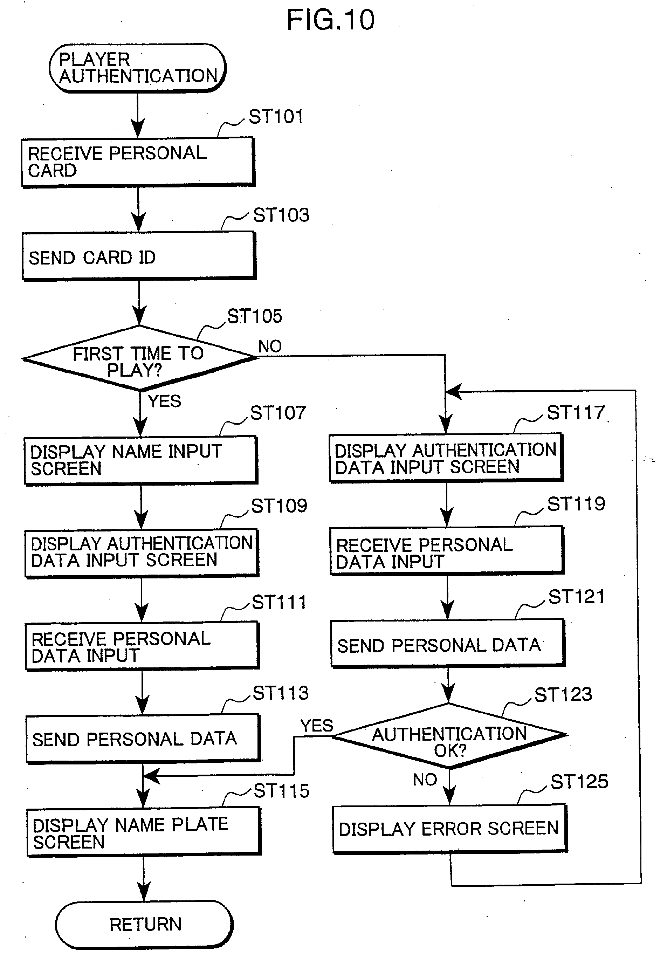

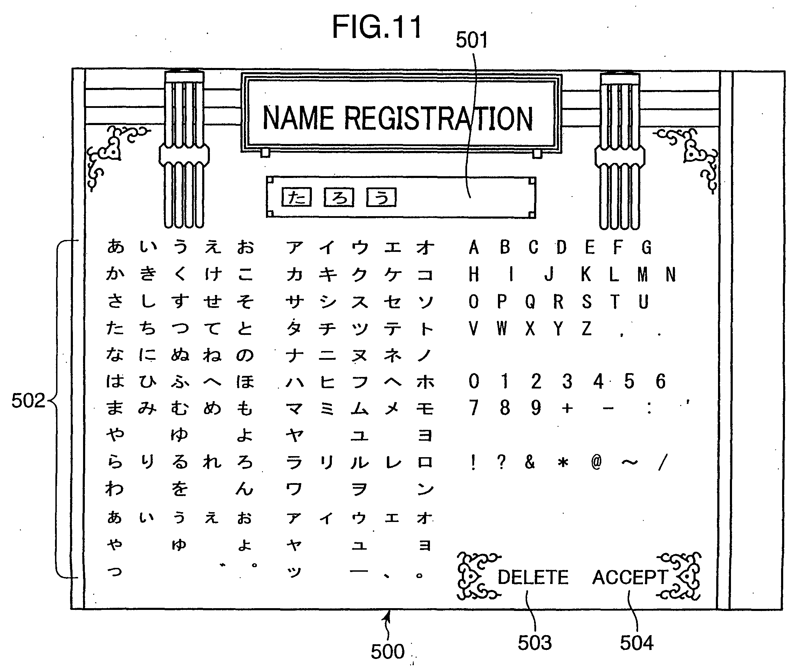

The player authentication routine executed by the client terminal device 1 in the above mah-jongg game will now be described. Fig. 10 is a detailed flow chart showing one example of the player authentication routine executed by the client terminal device 1, and Figs. 11 through 15 are examples of screen drawings showing the sequence of the player authentication processes shown in Fig. 10. The player authentication routine shown in Fig. 10 comprises the processes executed in step ST1 shown in Fig. 9.

First, when a personal card purchased by the player via the arcade-based server 2 is received by the card reader 13 (step ST101), the user ID stored on the received personal card is transmitted to the management server 3 via the network communication unit 18 of the arcade-based server device 2 connected to the client terminal device 1, the arcade-based server device 2 and the network (step ST103). When this is done, it is determined by the player authentication unit 361a of the management server device 3, based on the personal data stored in the player information storage unit 371, whether or not the user ID stored on the personal card is registered (step ST105), and data indicating that the user ID is registered or not registered is returned to the client terminal device 1 via the network, the arcade-based server device 2 and the network communication unit 18.

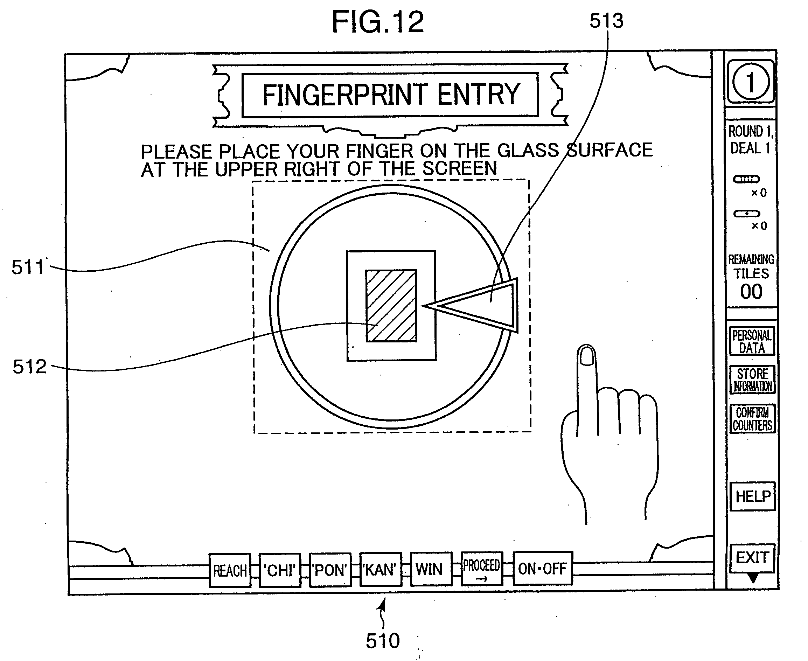

Where data indicating that the user ID is not registered is received from the management server device 3 (YES in step ST105), a name input screen (see Fig. 11) is displayed on the monitor 11 (step ST107). When name input is received from the player via the touch panel 11a, a fingerprint data input screen (see Fig. 12), which is one example of an authentication data input screen, is displayed on the monitor 11 (step ST109).

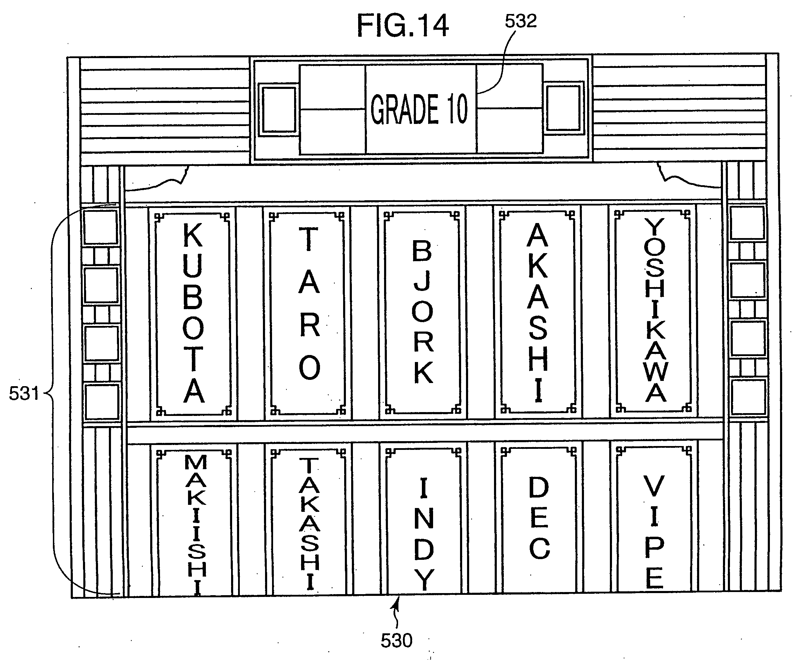

The player's fingerprint is then imaged through the placement of the player's finger on the imaging area of the CCD camera 14a of the fingerprint verification unit 14 by the player who sees the fingerprint data input notification screen shown in Fig. 12, and the characteristic data needed for personal authentication is extracted using the fingerprint information obtained from the CCD camera 14a and input by the fingerprint verification unit 14 as verification data (step ST111). The user ID stored on the personal card and the characteristic data extracted by the fingerprint verification unit 14 are sent to the management server device 3 to which the client terminal device 1 is connected via the network communication unit 18, the arcade-based server device 2 and the network (step ST113), and a name plate screen, which includes the name input by the player (see Fig. 14), is displayed on the monitor 11 (step ST115).

In step ST113, the user ID, the name data and the characteristic data extracted by the fingerprint verification unit 14, all of which are transmitted via the network communication unit 18, the arcade-based server device 2 and the network, are stored in the player information storage unit 371 of the management server 3, and are used in the subsequent player authentication processes.

Where data indicating that the user ID is registered is received from the management server device 3 (NO in step ST105), the fingerprint data input screen (see Fig. 12) is displayed on the monitor 11 (step ST117).

The player's fingerprint is then imaged through the placement of the player's finger on the imaging area of the CCD camera 14a of the fingerprint verification unit 14 by the player who sees the fingerprint data input notification screen shown in Fig. 12, the characteristic data needed for personal authentication is extracted using the fingerprint information obtained from the CCD camera 14a and input by the fingerprint verification unit 14 as verification data (step ST119), and the user ID stored on the personal card and the characteristic data extracted by the fingerprint verification unit 14 are sent to the management server device 3 via the network communication unit 18, the arcade-based server device 2 and the network (step ST121).

The characteristic data extracted by the fingerprint verification unit 14 and transmitted to the management server device 3 and the player's characteristic data stored beforehand in the player information storage unit 371 are compared by the player authentication unit 361a of the management server device 3, and where it is determined from such comparison that these data sets match, data indicating that the player is permitted to join a game is received from the management server device 3 via the network, the arcade-based server device 2 and the network communication unit 18 (YES in step ST123). The sequence then advances to step ST115, and the name plate screen (see Fig. 14), which includes the name input by the player, is displayed on the monitor 11 by the game execution unit 161A. Where data indicating that the player is not permitted to join a game is received from the management server device 3 via the network, the arcade-based server device 2 and the network communication unit 18 (NO in step ST123), an error screen not shown in the drawings is displayed on the monitor 11 (step ST125), the sequence returns to step ST117, and the above processes are repeated.

Consequently, because only the characteristic data needed for personal authentication is extracted from the fingerprint information by the fingerprint verification unit 14, abuse or outside disclosure of the player's fingerprint, which is highly valuable personal information, can be prevented.

Fig. 11 is an example of a screen drawing of the name input screen displayed on the monitor 11 in step ST107 shown in the flow chart of Fig. 10. The name input screen 500 includes a name input area 501 for input of the player's name, an input letter list display area 502 that displays a list of characters that can be input into the name input area 501, a 'Delete' button 503 that is pressed when the letters input into the name input screen 501 are to be deleted, and an 'Accept' button 504 that is pressed when the input letters are to be chosen as the player's name. In the name input screen 500 on the monitor 11 screen, the player inputs his name by using the input letter list display area 502, the 'Delete' button 503 and the 'Accept' button 504 in sequence.

Fig. 12 is an example of a screen drawing of the fingerprint data input notification screen displayed on the monitor 11 in steps ST109 and ST117 shown in the flow chart of Fig. 10. A guidance image 511 to indicate the position of the CCD camera 14a that images the player's fingerprint via placement of the player's finger thereon is displayed in the center of the fingerprint data input notification screen 510. By confirming on the fingerprint data input notification screen 510 that input of fingerprint information will be performed via placement of the player's finger in the shaded area 512 and indicated by the arrow 513 in the guidance area 511, the player can easily perform fingerprint input by placing his finger in the imaging area of the CCD camera 14a of the fingerprint verification unit 14 in the client terminal device.

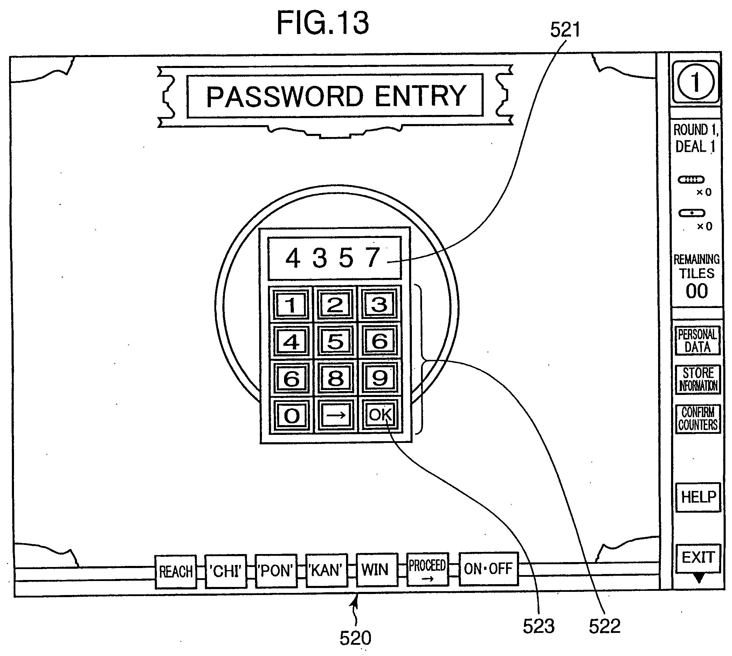

Other than the authentication method in which fingerprint data is used, a method in which a password or the like is used may also be adopted. Fig. 13 is an example of a screen drawing of a password input screen that is displayed on the monitor 11 in steps ST109 and ST117 shown in the flow chart of Fig. 10. The password input screen 520 includes a password input area 521 into which, where the player is playing for the first time, a desired number is input when the password is registered, and where the player is already registered, the number comprising the registered password is input, as well as an input number display area 522 that displays numbers to be input into the password input area 521 and an 'OK' button 523 that is pressed when the input number is correct. The player performs password input by entering the password using the input number display area 522 and pressing the 'OK' button 523 of the password input screen 520 on the monitor 11.

While the descriptions above used a fingerprint and a password as examples, the present invention is not limited to these implementations, and any information that sufficiently authenticates the prospective player may be used. For example, the prospective player may be authenticated using retina information.

Fig. 14 is an example of a screen drawing of the name plate display screen that is displayed on the monitor 11 in step ST115 shown in the flow chart of Fig. 10. The name plate display screen 530 includes a name plate display area 531 that displays a list of players having the same rank as the player, as well as a rank display area 532 that displays the rank or grade of the player operating the client terminal device 1.

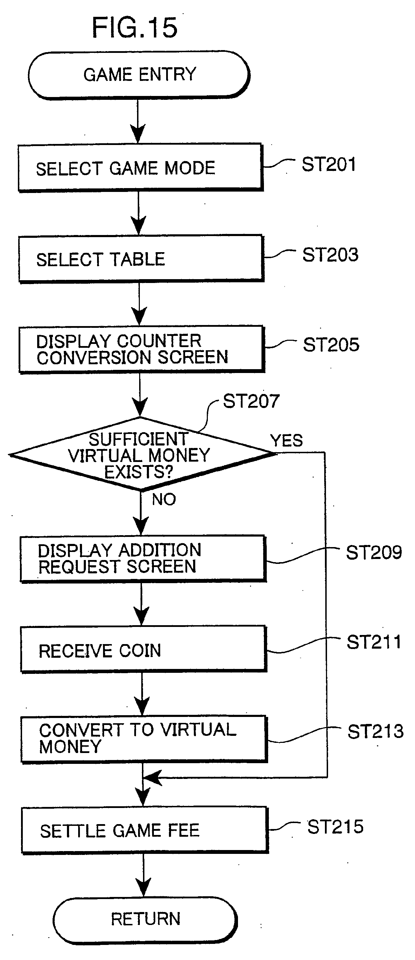

The routine pertaining to game entry that is executed by the player using the client terminal device 1 when the above mah-jongg game is played will now be described. Fig. 15 is a flow chart showing an example of the routine pertaining to game entry that is executed by the player using the client terminal device 1 when the above mah-jongg game is played, and Figs. 16-20 are drawings showing examples of screens that are displayed in sequence during the execution of the routine pertaining to game entry that is executed by the player and shown in Fig. 15. The routine pertaining to game entry that is executed by the player and shown in Fig. 15 comprises the processes executed in step ST2 shown in Fig. 9.

First, the game mode selection screen (see Figs. 16 and 17) is displayed, selection input to select from among a plurality of game modes is received from the player, and a game mode of either 'One-player game' (played against the CPU), 'Match game' (played in the arcade) or 'Online game' is chosen by the game mode selection unit 161c (step ST201).

The table selection screen (see Fig. 18) used to select from among 'One deal', 'One round' and 'Two rounds', which indicate the number of deals in the game, is displayed within the mode selected in step ST201 (in this embodiment, the 'Match game' (played in the arcade) mode was chosen), selection input to select one of the plurality of tables is received from the player, and the game mode selection unit 161c determines which among 'One deal', 'One round' and 'Two rounds' is to be played and selects the opponents (step ST203).

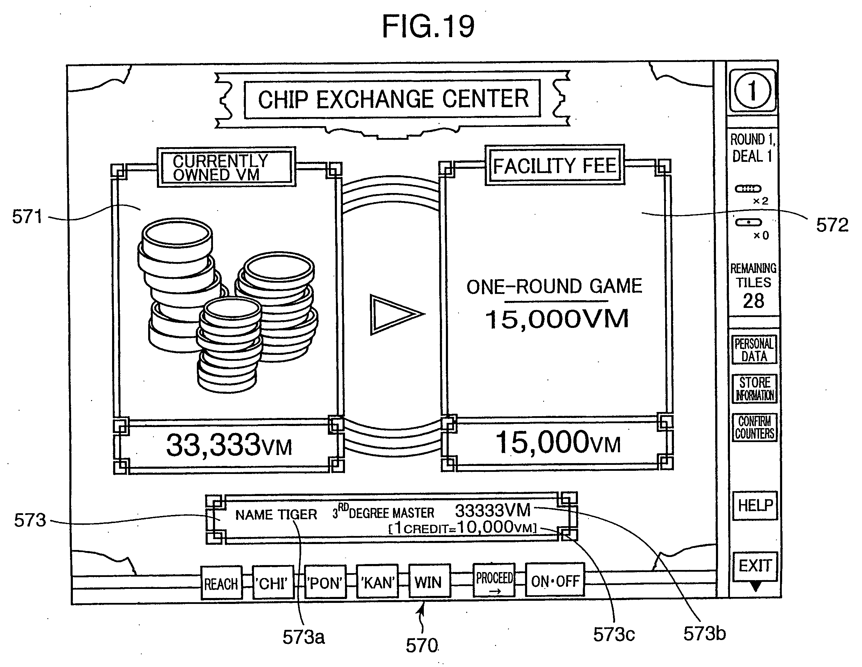

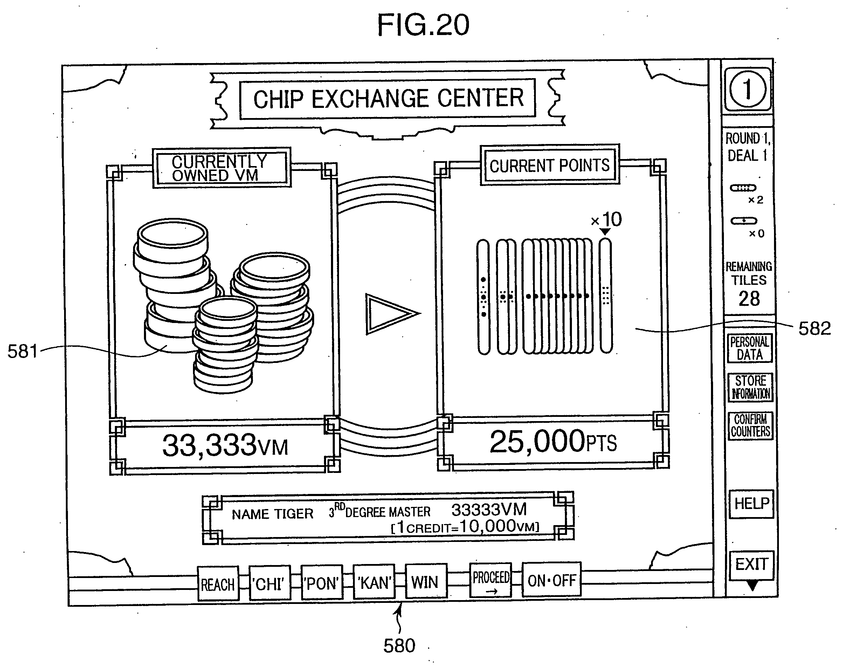

Counter conversion screens (see Figs. 19 and 20) are then displayed in sequence by the game fee settlement unit 161o in accordance with the chosen table (step ST205), and it is determined whether or not the player possesses an amount of virtual money corresponding to the facility fee and the counter rental fee for the number of deals selected in step ST205 (step ST207).

In step ST207, the pseudo-values conversion unit 161n converts the facility fee and counter rental fee for the number of deals selected into virtual money, and the amount of virtual money obtained as a result of the conversion is sent to the management server device 3 via the network communication unit 18, the arcade-based server device 2 and the network. The amount of virtual money possessed by the player that is stored in the player information storage unit 371 of the management server device 3 is then compared with the amount of virtual money thus received, it is determined whether or not the amount of virtual money needed for the player to join the game selected by the player remains in the player's account, and the result is sent back via the network, the arcade-based server device 2 and the network communication unit 18. Where a sufficient amount of virtual money exists (YES in step ST207), the sequence advances to step ST215. On the other hand, if an amount of virtual money adequate to cover the facility fee and counter rental fee for the number of deals selected does not exist (NO in step ST207), the amount by which the existing amount of virtual money is inadequate is sent back from the management server device 3 via the network, the arcade-based server device 2 and the network communication unit 18, and an addition request screen not shown in the drawings is displayed on the monitor 11 (step ST209).

Additional coins are then received via the coin receiving unit 15 from the player based on the addition request screen not shown in the drawings (step ST211), the real money conversion unit 161m converts the additional inserted coins into virtual money (step ST213), and data regarding the amount of virtual money obtained after conversion is sent to the management server device 3 via the network, the arcade-based server device 2 and the network communication unit 18. The virtual money accumulation unit 361b of the management server device 3 then adds the post-conversion amount of virtual money to the current amount of virtual money possessed by the player and updates the virtual money data stored in the player information storage unit 371.

The game fee settlement unit 161o then subtracts the amount of virtual money corresponding to the game fee converted by the real money conversion unit 161m from the newly calculated amount of virtual money. The resulting amount of virtual money is sent to the management server device 3 via the network communication unit 18, the arcade-based server device 2 and the network, and the virtual money data for that player that is stored in the player information storage unit 371 is updated (step ST215), whereupon the routine pertaining to game entry ends.

Fig. 16 is an example of a screen drawing of the game mode selection screen displayed on the monitor 11 in step ST201 shown in the flow chart of Fig. 15. The game mode selection screen 540 displays at the upper right of the screen the player information 541 contained in the client terminal device 1 on which the game entry routine was performed. It also displays in roughly the center of the screen the game mode titles 542 indicating 'One-player game', 'Match game' or 'Online game', guidance areas 543 in which each game mode is explained, and 'Choose' buttons 544 that are pressed when the player chooses a game mode. In addition, arcade-specific information 545 that includes the names and ranks of the players who have already joined the various game modes in the arcade are displayed at the bottom of the screen. The player information 541 includes the terminal number 541a of the client terminal device 1, the player nickname 541b, and the descriptor and rank 541c of the player. The arcade-specific information 545 includes the terminal number 541a of each client terminal device 1 being used, the player nickname 541b, and the descriptor and rank 541c of the player, as well as an information display area 545d in which messages pertaining to the point counters possessed by the player or recruiting players are displayed.

While arcade-specific information 545 is displayed at the bottom of the game mode selection screen shown in Fig. 16, various types of display independent of the game mode selection screen shown in Fig. 16 may also be implemented. For example, instead of the arcade-specific information 545 described above, an entry limit display area 551 shown in Fig. 17 may be used, which indicates a limited amount of time within which the game mode to be played within the arcade must be selected. Fig. 17 is an example of a screen drawing of the game mode selection screen displayed on the monitor 11 in step ST201 in the flow chart shown in Fig. 15.

Fig. 18 is an example of a screen drawing of the table selection screen displayed on the monitor 11 in step ST203 in the flow chart shown in Fig. 15. The table selection screen 560 includes table names 561 that indicate 'One deal', One round' or 'Two rounds', 'Join/Create' buttons 562 that are pressed when the player wishes to join a table, and opponent information 563 such as the names and ranks of the opponents who are already playing at each table. Such information is displayed for each table in two rows in the center of the screen. In addition, a remaining virtual money amount display area 564 that indicates the amount of virtual money possessed by the player who is currently selecting a table is displayed at the bottom of the screen. Here, players are currently being recruited for two tables: the second table from the left in the top row having a table name 561 of 'One-round Game A', and the table at the left edge of the bottom row having the table name 561 of 'Two-round Game A'. When the 'Join/Create' button 562 for the former table is pressed, a one-round game is selected, while when the 'Join/Create' button 562 for the latter table is pressed, a two-round game is selected. If the 'Join/Create' button 562 for the table at the left edge of the top row having the table name 561 of 'Create New Table' is pressed, the player creates a table for a new 'One round' game, for which other players can be recruited. In this case, a one-round game is selected.

Fig. 19 is an example of a screen drawing of the counter conversion screen displayed on the monitor 11 in the step ST205 shown in the flow chart of Fig. 15. The counter conversion screen 570 includes a possessed virtual money display area 571 which is located in the left-center part of the screen and displays the amount of virtual money possessed by the player, a facility fee display area 572 that is located in the right-center part of the screen and displays the facility fee for the table selected using the game mode selection unit 161c as an amount of virtual money, and a player information display area 573 which is displayed at the bottom of the screen and displays information regarding the player who is operating the client terminal device 1. The player information display area 573 includes the player's name/descriptor/rank 573a, the player's virtual money balance 573b, and a conversion rate display area 573c that displays the rate by which the player's amount of virtual money is increased in response to the insertion of the coin.

Fig. 20 is an example of a screen drawing of the counter conversion screen displayed on the monitor 11 in step ST205 shown in the flow chart of Fig. 15. Displayed at the left-center part of the counter conversion screen 580 is a possessed virtual money display area 581 that displays the amount of virtual money possessed by the player, while displayed at the right-center part of the screen is a counter rental fee display area 582 that displays as virtual money the counter rental fee corresponding to the table selected via the game mode selection unit 161c.

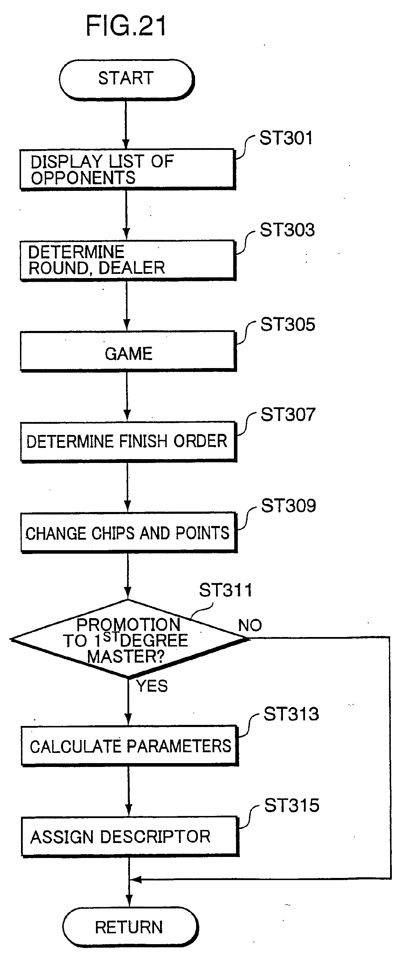

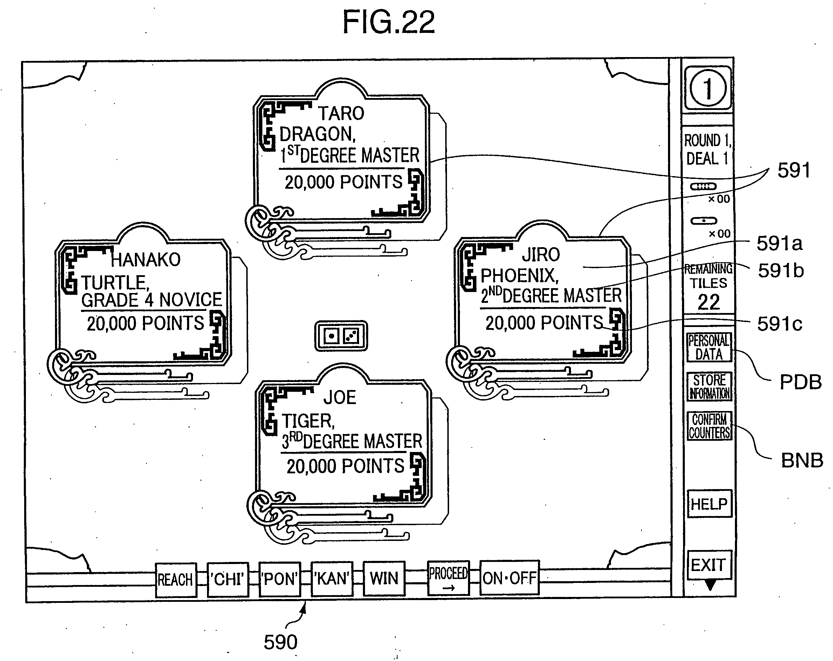

The routine performed in connection with the game executed via the client terminal device 1 during the mah-jongg game described above will now be described. Fig. 21 is a flow chart showing an example of the routine performed in connection with the game executed via the client terminal device 1, and Figs. 22-25 are examples of screen drawings of screens displayed in sequence during the processing performed in connection with the game shown in Fig. 21. The routine performed in connection with the game shown in Fig. 21 comprises the processes executed in step ST3 shown in Fig. 9.

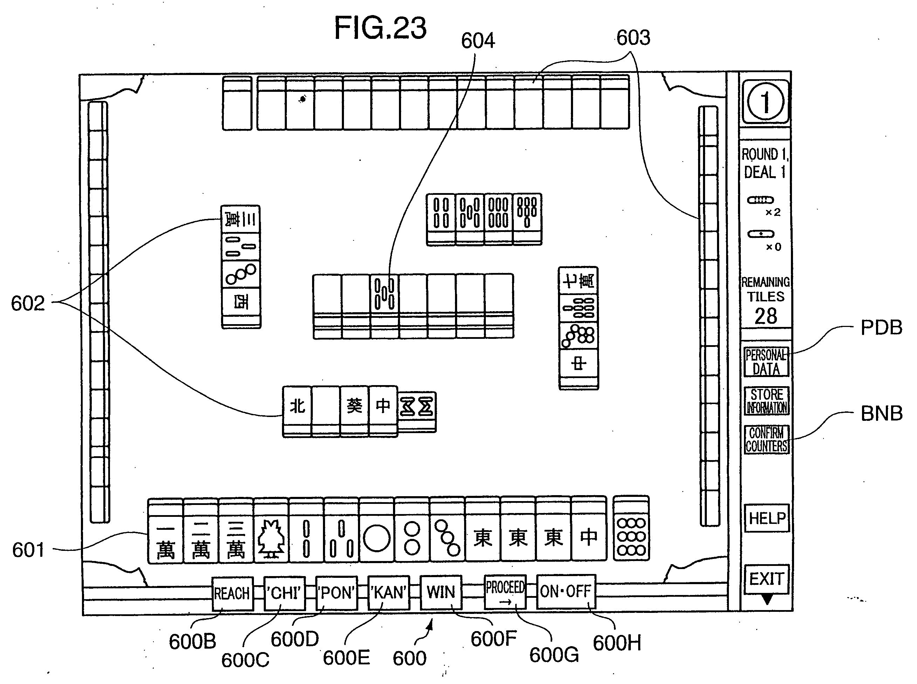

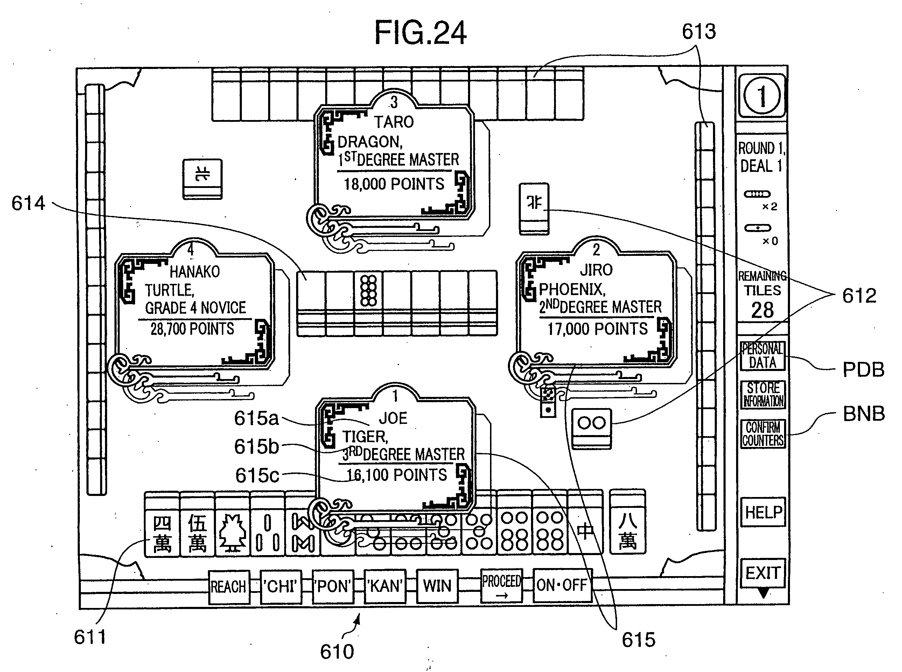

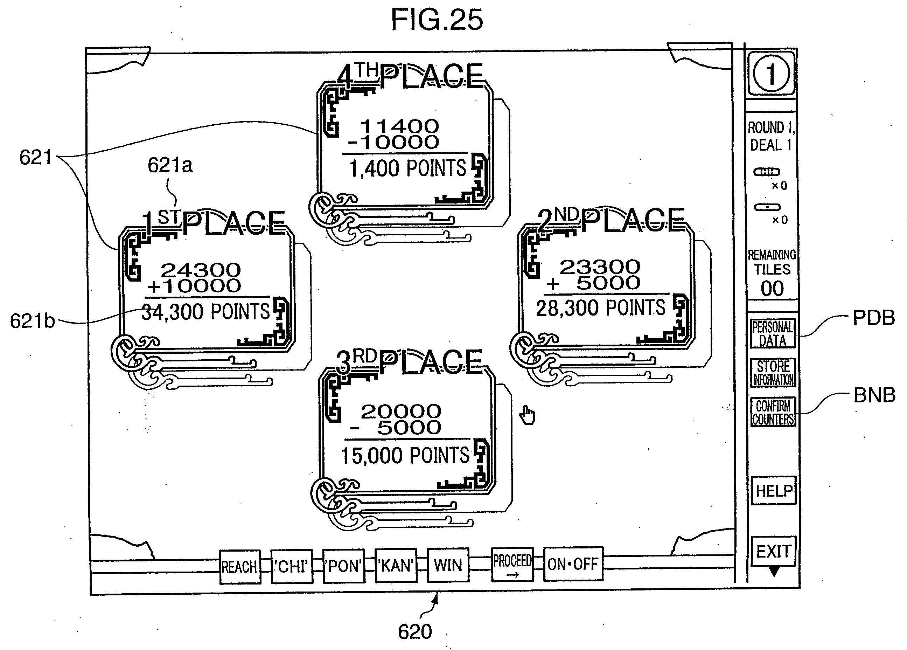

First, an opponent display screen (see Fig. 22) that displays the opponents at the table selected in the step ST203 described above is displayed by the opponent display unit 161k, and after a prescribed amount of time has elapsed (or when a prescribed operation has been performed by the player), a rank display screen not shown in the drawings that indicates the player's current rank and other information is displayed (step ST301). The round and the dealer are then determined (step ST303), the game is begun in step ST305, and game play screens are displayed (see Figs. 23 and 24). When the game ends, each player's points represented by point counters is calculated in step ST307, each player's order of finish is determined by the performance determination unit 161b, and a finish order display screen is displayed (see Fig 25).

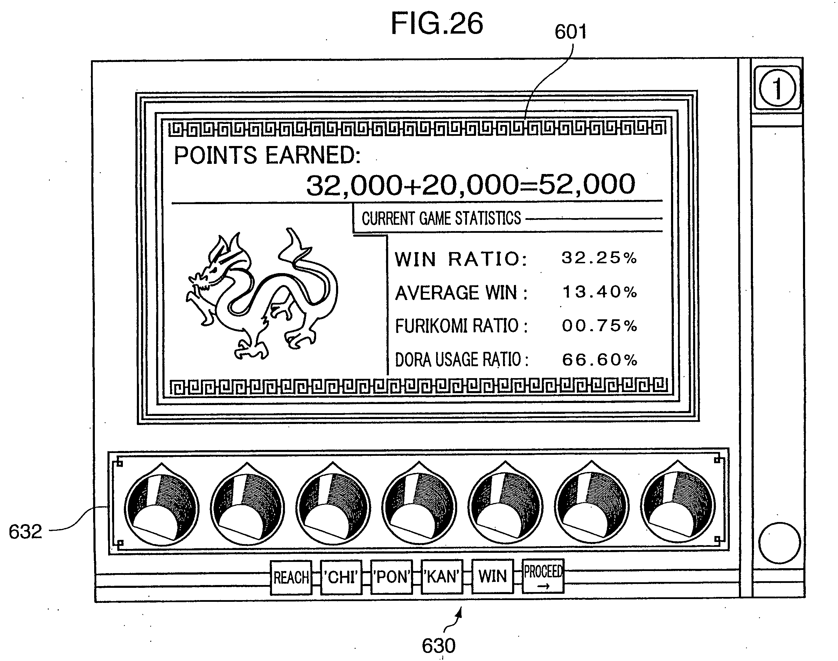

The number of points is then increased or decreased by the item assigning unit 161a, the items virtually possessed by the players are transferred by the item transfer unit 161d among the players based on the results of the determination by the performance determination unit 161b and the number of deals selected by the game mode selection unit 161c (step ST309), and an item display screen (see Fig. 26) is displayed. The rank determination unit 161f then determines a rank indicating the level of the player's skill at mah-jongg based on the number of items and points virtually possessed by the player, and determines whether or not the player's rank will be increased to 1st degree master (step ST311). If the player's rank will not be increased to 1st degree master, the item display screen (see Fig. 26) that shows the current number of items and the point counters represented by points earned is displayed, and the routine ends.

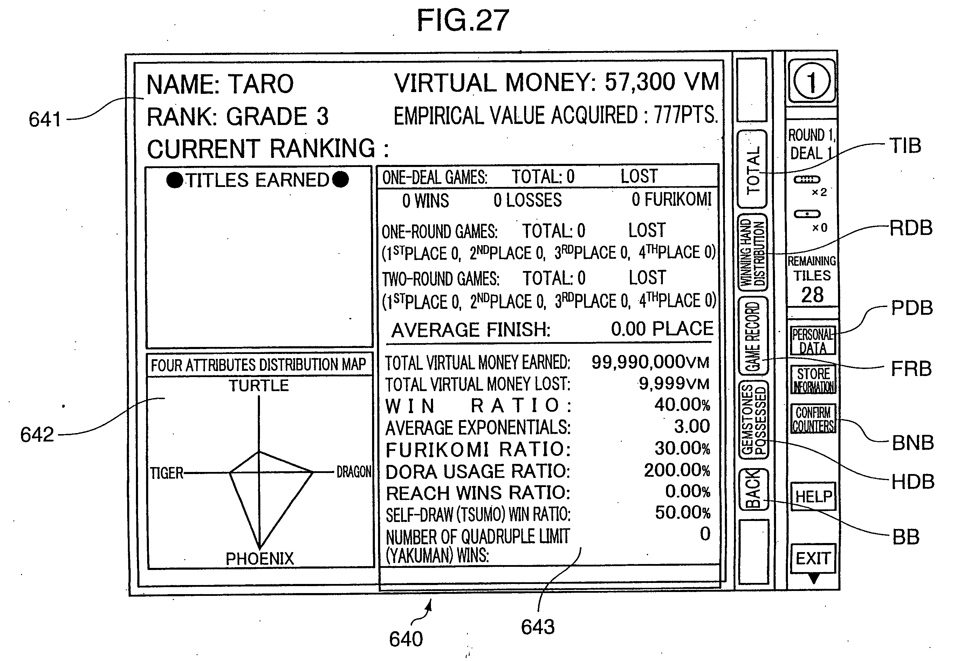

If the player's rank will be increased to 1st degree master, the parameters indicating the characteristics of the player's games are calculated by the parameter calculation unit 161g (step ST313). A descriptor applicable during games is then virtually assigned by the descriptor assigning unit 161h in step ST305 to the player based on the parameters calculated by the parameter calculation unit 161g (step ST315). After the item display screen (see Fig. 26) is displayed for a prescribed period of time, a rank promotion screen not shown in the drawings is displayed, whereupon the routine ends. Either before the game (until the execution of step ST303) or after the game (during or after the execution of step ST307), the personal information screens shown in Figs. 27-30 can be displayed by pressing a prescribed button in any game screen.

Fig. 22 is a screen drawing of the opponent display screen shown in step ST301 of the flow chart shown in Fig. 21. Displayed in the opponent display screen 590 is player information 591 that includes a nickname 591a and a descriptor and rank 591b regarding each of four competitors including the player. The player information 591 at the bottom of the screen is the player information for the player using the client terminal device 1, the player information 591 at the top of the screen is player information for the player sitting opposite this player (TOIMEN: the opponent who sits across from the player in a virtual sense and plays two turns before the player), the player information 591 at the left of the screen is player information for the opponent who plays just before the player (KAMICHA: the opponent who sits to the left of the player in a virtual sense and plays one turn before the player), and the player information 591 at the right of the screen is player information for the opponent who plays just after the player (SHIMOCHA: the opponent who sits to the right of the player in a virtual sense and plays one turn after the player). A personal data button PDB is displayed in roughly the center of the right edge of the screen and is pressed in order to display the player's personal information, while a counter confirmation button BNB is displayed below the personal data button PDB and is pressed in order to display the point counters possessed by all four game competitors including the player. Because the descriptor and the rank of each opponent can be seen via the opponent display screen 590, the skill level and game style of each opponent can be learned and the player can enjoy the task of determining his own game style (plotting strategy) based on his opponents. For example, where an opponent has a high rank (indicating that he is a strong player) and a descriptor of 'phoenix' (indicating that he tends to go for a quick win), the player can design a strategy to compete with the opponent by speeding up the development of his own hand.

Figs. 27-30 are screen drawings of the player personal information screens displayed by pressing a prescribed button (personal data button PDB described below) in a game screen before the game is played (until the execution of step ST303 in the flow chart shown in Fig. 21) or after the game is completed (during or after the execution of step ST307 in the flow chart shown in Fig. 21). The personal information screens include a general personal information screen 640, which is a screen that comprehensively presents the player's personal information, a winning hand distribution screen 650 that shows the distribution of the player's wining hands, a game record screen 660 that indicates results achieved by the player in past games, and a dragon chips screen 670 that indicates the number of dragon chips or the like possessed by the player. Figs. 27-30 are screen drawings of the general personal information screen 640, the winning hand distribution screen 650, the game record screen 660 and the dragon chips screen 670, respectively.

Displayed in each of the general personal information screen 640, the winning hand distribution screen 650, the game record screen 660 and the dragon chips screen 670 are a personal data button PDB that is located in roughly the center of the right edge of the screen and is pressed in order to display the player's personal information, a counter confirmation button BNB that is located below the personal data button PDB and is pressed in order to display the point counters possessed by all four game competitors including the player, a total information button TIB that is located to the left of the personal data button PDB and is pressed in order to display the general personal information screen, which is a screen that comprehensively presents personal information regarding the player, a winning hand distribution button RDB that is pressed in order to display the winning hand distribution screen, which is a screen that indicates the distribution of the player's winning hands, a game record button FRB that is pressed in order to display the game record screen, which is a screen that indicates the results attained by the player in past games, a dragon chips button HDB that is pressed in order to display the dragon chips screen, which is a screen that indicates the number of dragon chips and the like possessed by the player, and a 'Back' button BB that is pressed in order to return to the original screen.

Displayed in the general personal information screen 640 shown in Fig. 27 are a player nickname 641 located at the upper left of the screen, a display area 642 that is located at the upper right of the screen and indicates the player's current amount of virtual money and points earned in the past, a radar chart 643 that is located at the bottom left of the screen and shows the level of each of the four parameters (win ratio, 'furikomi' ratio, average number of 'dora' tiles and average number of exponentials) indicating the player's characteristics. In addition, various types of data that indicate the player's past game results are displayed in the bottom center of the screen.

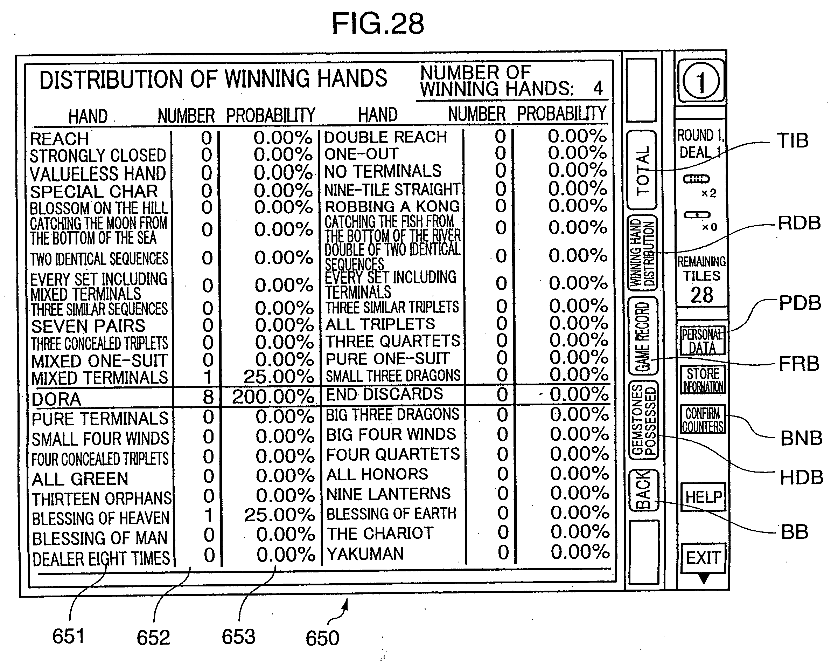

Displayed in table form in the winning hand distribution screen 650 shown in Fig. 28 are hand names 651 comprising the names used to describe the various winning hands, number of hands 652 comprising the number of times that the corresponding hand has represented the player's winning hand, and hand probability 653 that is a percentage obtained by dividing the number of hands 652 by the number of times the player won with that hand.

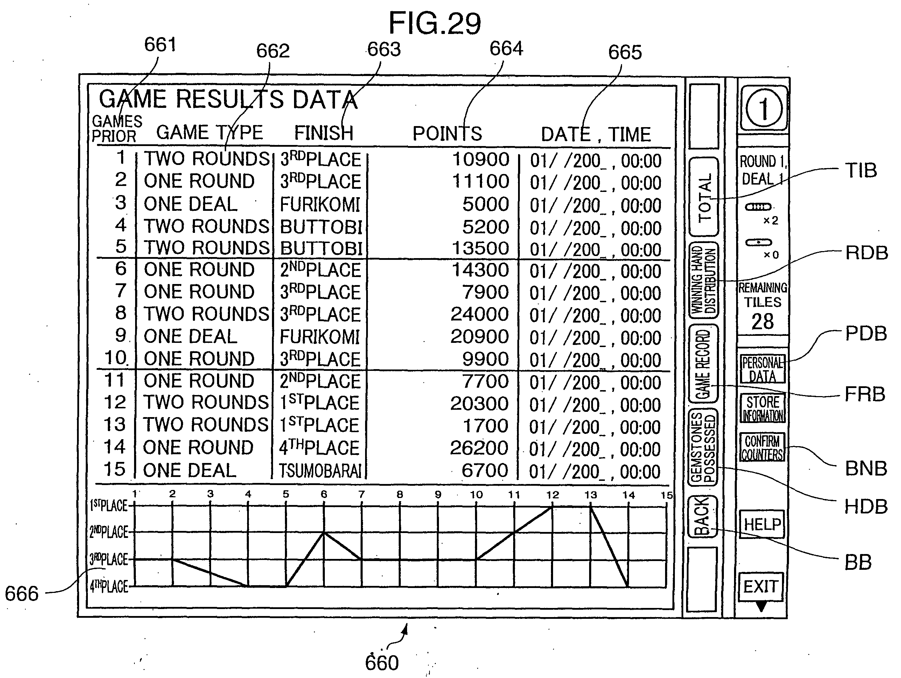

Displayed in the game record screen 660 shown in Fig. 29 are the results for the player's most recent 15 games, which are displayed in table form at the top of the screen, and a line chart 666 that is located at the bottom of the screen and shows the player's relative ranking in each of those 15 games. The game results include such information as the game number 661 that indicates how many games prior to the current game the past game was played, the type of game 662 that indicates whether the past game was a 'One round' game, an 'One round' game or a 'Two rounds' game, and game results 663 that indicate the results of that game.

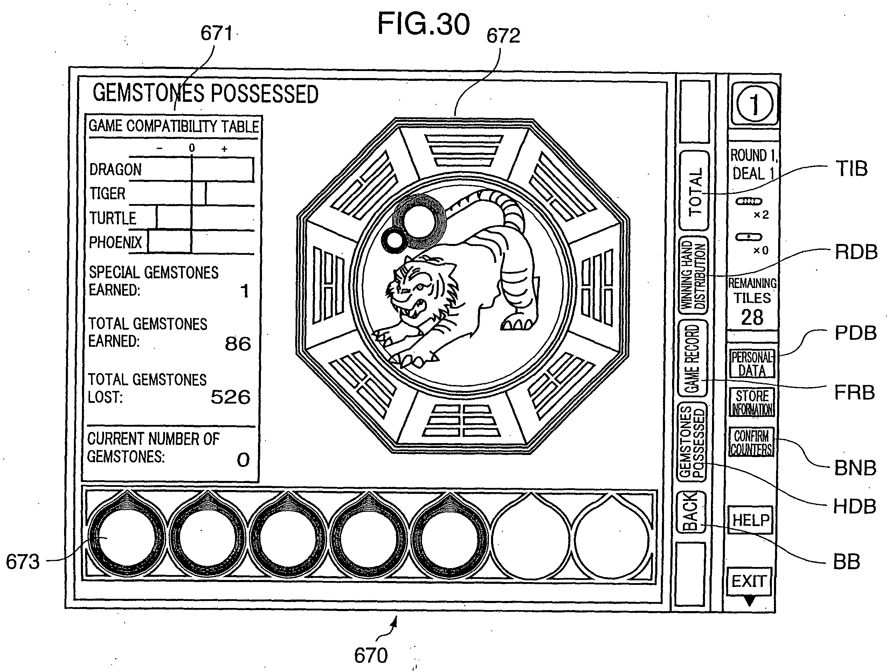

Displayed in the dragon chips screen 670 shown in Fig. 30 are various types of data 671 that include (i) the cumulative number of gemstones earned, which represents the total number of dragon chips earned by the player in past games, and (ii) the cumulative number of lost gemstones, which represents the total number of dragon chips lost by the player in past games, a character image 672 that corresponds to the descriptor that indicates the player's characteristics, and a number of chips required image 673 that indicates the number of dragon chips required for the player to rise to the next higher rank.

The data required in order to display the images shown in Figs. 27-30 is stored in the RAM 162 shown in Fig. 3 on an updatable basis.

Fig. 23 is a screen drawing of the game play screen displayed in step S305 in the flow chart shown in Fig. 21. Displayed at the bottom of the game play screen 600 are a 'Reach' button 600B that is pressed in order to declare a reach, a 'Chi' button 600C that is pressed in order to declare a 'chi', a 'Pon' button 600D that is pressed in order to declare a 'pon', a 'Kan' button 600E that is pressed in order to declare a 'kan', a 'Win' button 600F that is used to declare that one has won the hand, a 'Proceed' button 600G that is pressed in order to continue the deal, and a declare change button 600H that is pressed in order to select whether or not the player is to make a declaration in response to the discarded tiles of other players. Displayed at the right of the screen is a counter confirmation button BNB that is pressed in order to check the point counters possessed by the players.

Where all players at the table have selected 'Don't declare in response to other player's discard' using the declare change button 600H, when a player discards a tile, a tile can be immediately drawn by the next player. Where the player has selected 'Declare in response to other player's discard' by using the declare change button 600H, when another player discards a tile regarding which the player could make a declaration, that discarded tile flashes to indicate that the player can make a declaration regarding that tile, and the next player cannot draw a tile until the current player either (1) makes a declaration using the 'Chi' button 600C, the 'Pon' button 600D or the 'Kan' button 600E or (2) continues the deal by pressing the 'Proceed' button 600G, or a prescribed period of time (such as five seconds) elapses.

In addition, the player's hand tiles 601 are displayed at the bottom of the game play screen 600 such that the types of tiles are visible, while the opponents' hand tiles 603 are displayed at the top and the sides of the screen such that the types of tiles are not visible. A dead wall 604 that includes a 'dora' display tile is also displayed in the game play screen 600, with discard tiles 602 placed around the dead wall 604, and a round wind display mark 605 that indicates whether the round is '1$^{st}$ round' or '2$^{nd}$ round' is displayed at the upper left area of the dead wall 604.

Fig. 24 is a screen drawing showing the counter confirmation screen that is displayed when the counter confirmation button BNB in the game play screen 600 is pressed. Displayed in the counter confirmation screen 610 are all the components of the game play screen 610 as well as point display areas 615 that include, for each of the four players, the player's nickname 615a, descriptor and rank 615b, and number of points possessed 615c. The counter confirmation screen 610 (i.e., the point display areas 615) is displayed when the counter confirmation button BNB is pressed. It disappears after a prescribed period of time (for example, five seconds) has elapsed, and reverts to the game play screen 600.

Fig. 25 is a screen drawing of the finish order display screen displayed in step ST309 in the flow chart shown in Fig. 21. Displayed in the finish order display screen 620 are finish place display areas 621 including a finish place 621a and a final point total 621b for each player.

Fig. 26 is a screen drawing of the item display screen displayed in steps ST311 and ST315 in the flow chart shown in Fig. 21. Displayed in the item display screen 630 are a performance display area 631 that indicates the player's performance in the present game, and a required number of chips image 632 that indicates the number of chips required for the player to be promoted to the rank immediately above his current rank.

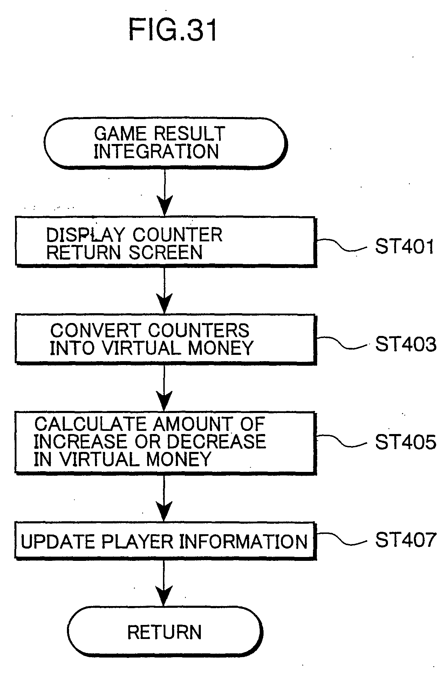

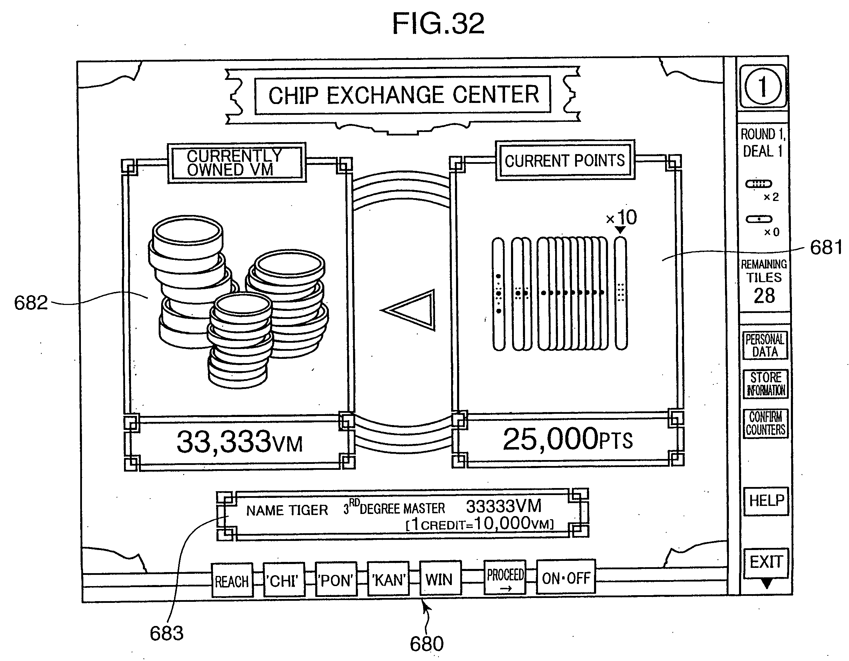

The routine performed in connection with the game result integration executed by the client terminal device 1 during the above mah-jongg game will now be described. Fig. 31 is a flow chart showing an example of the routine performed in connection with the game result integration executed by the client terminal device, and Fig. 32 is a drawing showing an example of a counter return screen displayed during execution of the game result integration routine shown in Fig. 31. The game result integration routine shown in Fig. 31 comprises the processes executed in step ST4 shown in Fig. 9.

First, the counter conversion screen (see Fig. 32) by which the rented counters that were rented when the player shown in Fig. 31 began the game are returned is displayed by the game result integration unit 161p (step ST401), the point counters possessed as a result of the game is converted into virtual money by the pseudo-values conversion unit 161n (step ST403), the amount of increase or decrease in the player's virtual money corresponding to the point counters possessed by the player after the game, obtained as a result of conversion by the pseudo-values conversion unit 161n, as well as the amount of virtual money corresponding to the counters rented by the player before the game, are calculated and reflected in the player's virtual money balance by the game result integration unit 161p (step ST405), the virtual money data obtained as a result of the calculation is sent to the management server device 3 via the network communication unit 18, the arcade-based server device 2 and the network, and the player's virtual money data stored in the player information storage unit 371 is updated (step ST407), whereby game result integration routine is completed.

Fig. 32 is an example of a screen drawing of the counter return screen displayed on the monitor 11 in step ST401 shown in the flow chart of Fig. 31. Displayed in the counter return screen 680 are a possessed virtual money display area 682 which is located at the left-center part of the screen and displays the amount of virtual money possessed by the player, a counter fee display area 681 that is located at the right-center part of the screen and displays in virtual money the counter rental fee calculated by the game result integration unit, and a player information display area 683 that is located at the bottom of the screen and displays information regarding the player who is operating the client terminal device 1.

The present invention can have the following variations.

(1) In this embodiment, counters or the like were used as pseudo-values in the mah-jongg game and were converted into virtual money before being used, but other than points earned in a mah-jongg game, tokens earned in a pachinko game or in a video slot machine game, or various items earned in a role-playing game or the like can also be used as pseudo-values and converted into virtual money.

(2) In this embodiment, the client terminal devices 1, the arcade-based server device 2 and the management server device 3 were connected over a network and the video game system pertaining to the present invention was realized through the transmission and receipt of various types of data, but the video game system pertaining to the present invention is not limited to this construction, and may be applied in a construction in which a plurality of client terminal devices (equivalent to video game apparatuses) 1 are connected to the management server device 3 over a network, and various types of data are transmitted and received therebetween. In this case, the present invention can be implemented by having the network communication unit 18 of each client terminal device 1 be connected to the network communication unit 38 of the management server device 3 over a network such that data communication can take place therebetween.

(3) In this embodiment, the management server device 3 included a player information storage unit 371 (equivalent to the storage means), a player authentication unit 361a (equivalent to the authentication means) and a virtual money accumulation unit 361b (equivalent to the virtual money accumulation means), but where a game is not played with a client terminal device 1 located in a different arcade over a network, the three functions described above can be included in the client terminal device 1, or the arcade-based server device 2 can operate as a management server that includes these three functions. This would allow the person managing the video game system pertaining to the present embodiment to select the type of system in accordance with the scale or structure of the business.

(4) In the description of this embodiment, the item assigning unit 161a, game mode selection unit 161b, performance determination unit 161c, item transfer unit 161d, rank determination unit 161f, parameter calculation unit 161g, descriptor assigning unit 161h and opponent display unit 161k were all contained in the CPU 161 of the client terminal device 1, but one or more of the item assigning unit 161a, game mode selection unit 161b, performance determination unit 161c, item transfer unit 161d, rank determination unit 161f, parameter calculation unit 161g, descriptor assigning unit 161h and opponent display unit 161k may be located on the management server device 3 (or the arcade-based server device 2) connected over the network. Where all of the item assigning unit 161a, game mode selection unit 161b, performance determination unit 161c, item transfer unit 161d, rank determination unit 161f, parameter calculation unit 161g, descriptor assigning unit 161h and opponent display unit 161k are located on the management server device 3, an online game can be easily played among client terminal devices 1 that can be connected to each other via the management server device 3.

(5) In the description of this embodiment, the rank storage unit 162a, history storage unit 162b and descriptor storage unit 162c were all contained in the RAM 162, but one or more of the rank storage unit 162a, history storage unit 162b and descriptor storage unit 162c may be located on the management server device 3 (or the arcade-based server device 2) that is connected over the network. Where all of the rank storage unit 162a, history storage unit 162b and descriptor storage unit 162c are located on the management server device 3 (or the arcade-based server device 2), information can be managed in a unified fashion.

(6) In this embodiment, the user ID from the personal card, the characteristic data needed for personal authentication using the player's fingerprint information corresponding to the user ID, and the current, updated amount of virtual money possessed by the player following calculation by the virtual money accumulation unit 361b, the game fee settlement unit 161o or the game result integration unit 161p were stored in the player information storage unit 371 of the management server device 3 as player information, but other various types of data may also be stored in the player information storage unit 371 as well.

(7) In this embodiment, conversion was performed by the real money conversion unit 161m and the pseudo-values conversion unit 161n using prescribed conversion rates, but these conversion rates may be changed or updated from time to time. For example, the conversion rate may be changed depending on the rank of the player playing the game, or depending on the type of game.

(8) The player information stored in the player information storage unit 371 of the management server device 3 is not limited to the examples described in the above embodiment, and may include as virtual money data for each player the cumulative amount of virtual money earned, the cumulative number of coins inserted, and the amount of money accumulated.

Furthermore, the date of player registration and the most recent game play date may be stored in the player information storage unit 371 for each player as player personal data. In addition, such data as the total number of deals played, the total number of wins, the total number of 'furikomi', the total number of JIHAI wins, the total number of 'reach' wins, the cumulative number of exponentials in winning hands, a winning hand exponential list, the total number of winning hands, a list of titles earned, one-deal game data, one-round game data, two-round game data and game history data can also be stored in the player information storage unit 371 as player data. By having such data available for reference by the player, the player can use the data in developing a game strategy, or in order to recruit other players.

Moreover, the number of games played in each mode, the number of times the player finished in a particular place (1st place through 4th place), the number of wins (wins or 'ready' status), the number of losses ('furikomi' or FUTEN), the number of 'furikomi' losses, the number of TOBASHI, the number of TOBASARE, and the like may be stored as game record data in the player information storage unit 371.

Furthermore, the mode in which the game was played, the game results in the chosen game mode, the increase or decrease in points resulting therefrom, the time of play, the number of winning hands, the rank of the player when the game was won, the recorded time of the win and the like may also be stored as player information in game record data in the player information storage unit 371.

(9) In this embodiment, a magnetic card, IC card or other card on which a user ID and other personal information are recorded is used as a personal card, but an IC card on which individual player virtual money data and player information, for example, can be updatably recorded may also be used.

In summary, the present invention relates to a video game system that has game execution means that allows a player to play a prescribed game via game screens, and that transfers prescribed pseudo-values based on the game results, wherein the system includes storage means that stores, for each player registered using a personal card, player information that includes information regarding virtual money used in the game, first conversion means that performs conversion between the virtual money and real money using a prescribed conversion rate, second conversion means that performs conversion between the virtual money and the prescribed pseudo-values using a prescribed conversion rate, virtual money accumulation means that adds virtual money to the storage area for the player information for the individual player whose player information was stored in the storage means via a personal card, based on the calculation performed by the first conversion means, and game result integration means that converts the amount of increase or decrease in the prescribed pseudo-values that occurs each time the game is executed by the game execution means into virtual money using the second conversion means, performs addition or subtraction of the amount of increase or decrease to or from the amount of the player's current virtual money stored in the storage means, and updates the player information in the storage means.

According to the above invention, player information is stored in the storage means for each player registered using a personal card, conversion is carried out between the virtual money and actual money by the first conversion means using a prescribed conversion rate, and conversion is carried out between the virtual money and the prescribed pseudo-values by the second conversion means using a prescribed conversion rate. Furthermore, virtual money is added by the virtual money accumulation means to the player information area for the individual player whose player information was stored in the storage means via a personal card, based on the calculation performed by the first conversion means. The game result integration means converts the amount of increase or decrease in the prescribed pseudo-values that occurs each time the game is executed by the game execution means into virtual money using the second conversion means, performs addition or subtraction of the amount of increase or decrease to or from the amount of the player's current virtual money stored in the storage means, and updates the player information in the storage means.

Consequently, in this video game system, when the player plays a game, there is no conversion between real money, comprising a currency or the like that is used in the real world, and the prescribed pseudo-values used in the game. Rather, because the pseudo-values that are generated based on the game results are transferred in the form of virtual money that has an exchange rate within the game space, the problem endemic to games that handle prescribed pseudo-values, i.e., the gambling aspect, is eliminated. Moreover, because the virtual money has an exchange rate relative to the pseudo-values in the game space, a game can be provided that generates tension for the player due to the fact that the virtual money is earned or is confiscated based on the game results.

In addition, the aforementioned video game system may include game fee settlement means that converts the game fee charged each time the game is executed by the game execution means into virtual money using the second conversion means, subtracts the virtual money amount obtained as a result of the conversion from the player's current amount of virtual money stored in the storage means, and updates the player information in the storage means.

According to the invention with the above features, a game fee settlement means converts the game fee charged each time the game is executed by the game execution means into virtual money using the second conversion means, subtracts the virtual money amount obtained as a result of the conversion from the player's current amount of virtual money stored in the storage means, and updates the player information in the storage means.

Consequently, the game fee charged when the game is played does not involve a conversion between real money, comprising a currency or the like that is used in the real world, and the prescribed pseudo-values used in the game. Rather, the payment from the player is made in the form of virtual money having an exchange rate within the game space, and the amount of virtual money possessed by the player is updated accordingly. Therefore, the administrator of the video game system can receive a constant revenue in accordance with the player's game play conditions. Furthermore, because the player's virtual money is accumulated if the player keeps winning, the player can continue to play the game without having to pay real money as a game fee.

Furthermore, the games handled by the video game system include a mah-jongg game that treats the points of point counters as prescribed pseudo-values.

According to the above features, the games handled by the video game system include a mah-jongg game that treats the points of point counters as pseudo-values. Therefore, because the points of point counters obtained based on the game results are not directly converted into real money, but can be converted as prescribed pseudo-values into virtual money, in a mah-jongg game, which can easily be played as a gambling game, the gambling aspect is eliminated by converting the pseudo-values represented as the counters that may be obtained in the game space into virtual money that can be used within the game space.

The system may further include authentication means that determines whether or not a player is permitted to join a game by performing authentication to determine whether or not a player who has been received into the system via a personal card is a registered player.

According to the invention with the above features, in the video game system, a determination regarding whether or not a player is permitted to join a game is carried out by performing authentication to determine whether or not a player who has been received into the system via a personal card is a registered player.

Therefore, because authentication to determine whether or not a player is permitted to join a game is performed based on information that identifies the player and is contained on a personal card, the burden of specifying a given player using the player identification data that is recorded in the personal card and authenticating the player based on the huge amount of player information already stored is reduced. Furthermore, by performing authentication based on the personal card, authentication regarding whether or not a player is a properly registered player is carried out twice, effectively prohibiting improper use of the system.

Moreover, because the double-checking carried out via authentication of both the personal card and the player himself determines whether or not the player is permitted to join a game, a reliable game which non-registered players cannot join can be provided.

Yet moreover, the invention may include fingerprinting means that obtains fingerprints, wherein the storage means receives at the time of registration fingerprint data for the player to be registered and stores it in the storage area for the player information corresponding to that player, and the authentication means obtains the player fingerprint data in connection with the reception of the personal card and compares it with the fingerprint data stored in the corresponding player information storage area.

According to the above invention, the player's fingerprint is obtained by the fingerprinting means, the fingerprint data of the player to be registered is received at the time of registration by the storage means and stored in the storage area for the player information corresponding to that player, and the player fingerprint data is obtained by the authentication means in connection with the reception of the personal card and compared with the fingerprint data stored in the corresponding player information storage area.

Therefore, because authentication is performed using information regarding whether or not each player's fingerprint matches that of a registered player, there is no problem of improper disclosure of information, unlike the situation when a password or other identification number is used.

In addition, the present invention also relates to a video game apparatus that has game execution means that allows a player to play a prescribed game via game screens, and that transfers prescribed pseudo-values based on the game results, wherein the apparatus includes storage means that stores, for each player registered using a personal card, player information that includes information regarding virtual money used in the game, first conversion means that performs conversion between the virtual money and real money using a prescribed conversion rate, second conversion means that performs conversion between the virtual money and the prescribed pseudo-values using a prescribed conversion rate, virtual money accumulation means that adds virtual money to the storage area for the player information for the individual player whose player information was stored in the storage means via a personal card, based on the calculation performed by the first conversion means, and game result integration means that converts the amount of increase or decrease in the prescribed pseudo-values that occurs each time the game is played by the game execution means into virtual money using the second conversion means, performs addition or subtraction of the amount of increase or decrease to or from the amount of the player's current virtual money stored in the storage means, and updates the player information in the storage means.

According to the invention in the above form, in the video game apparatus, player information is stored in the storage means for each player registered using a personal card, conversion is carried out between the virtual money and actual money by the first conversion means using a prescribed conversion rate, and conversion is carried out between the virtual money and the prescribed pseudo-values by the second conversion means using a prescribed conversion rate. Furthermore, virtual money is added by the virtual money accumulation means to the player information area for the individual player, whose player information was stored in the storage means via a personal card, based on the calculation performed by the first conversion means. The game result integration means converts the amount of increase or decrease in the prescribed pseudo-values that occurs each time the game is executed by the game execution means into virtual money using the second conversion means, performs addition or subtraction of the amount of increase or decrease to or from the amount of the player's current virtual money stored in the storage means, and updates the player information in the storage means.

Consequently, in this video game apparatus, when the player plays a game, there is no conversion between real money, comprising a currency or the like that is used in the real world, and the prescribed pseudo-values used in the game. Rather, because the pseudo-values that are generated based on the game results are transferred via virtual money that has an exchange rate within the game space, the problem endemic to games that handle prescribed pseudo-values, i.e., the gambling aspect, is eliminated. Moreover, because the virtual money has an exchange rate relative to the pseudo-values in the game space, a game can be provided that generates tension for the player due to the fact that the virtual money is earned or is confiscated based on the game results.

The present invention further relates to a video game execution control method that has a game execution step that allows a player to play a prescribed game via game screens and that uses a video game apparatus that transfers prescribed pseudo-values based on the game results, wherein the method includes a storage step in which the video game apparatus stores player information that includes information regarding virtual money used in the game for each player registered using a personal card, a first conversion step in which conversion between the virtual money and real money is performed using a prescribed conversion rate, a second conversion step in which conversion between the virtual money and the prescribed pseudo-values is performed using a prescribed conversion rate, a virtual money accumulation step in which virtual money is added to the storage area for the player information for the individual player whose player information was stored in the storage means via a personal card, based on the calculation performed in the first conversion step, and a game result integration step in which the amount of increase or decrease in the prescribed pseudo-values that occurs each time the game is executed via the game execution step is converted into virtual money using the second conversion step, addition or subtraction of the amount of increase or decrease is performed to or from the amount of the player's current virtual money stored in the storage means, and the player information stored in the storage step is updated.

According to the invention in the above form, in the video game apparatus, player information is stored in the storage means for each player registered using a personal card, conversion is carried out between the virtual money and actual money by the first conversion means using a prescribed conversion rate, and conversion is carried out between the virtual money and the prescribed pseudo-values by the second conversion means using a prescribed conversion rate. Furthermore, virtual money is added by the virtual money accumulation means to the player information area for the individual player whose player information is stored in the storage means via a personal card, based on the calculation performed by the first conversion means. The game result integration means converts the amount of increase or decrease in the prescribed pseudo-values that occurs each time the game is played via the game execution means into virtual money using the second conversion means, performs addition or subtraction of the amount of increase or decrease to or from the amount of the player's current virtual money stored in the storage means, and updates the player information in the storage means.

Consequently, in this video game apparatus, when the player plays a game, there is no conversion between real money, comprising a currency or the like that is used in the real world, and the prescribed pseudo-values used in the game. Rather, because the pseudo-values that are generated based on the game results are transferred via virtual money that has an exchange rate within the game space, the problem endemic to games that handle prescribed pseudo-values, i.e., the gambling aspect, is eliminated. Moreover, because the virtual money has an exchange rate relative to the pseudo-values in the game space, a game can be provided that generates tension for the player due to the fact that the virtual money is earned or is confiscated based on the game results. Moreover, because the virtual money has an exchange rate relative to the pseudo-values in the game space, the administrator of the video game system can receive a constant revenue in accordance with the player's game play conditions. Furthermore, because the player's virtual money is accumulated if the player keeps winning, the player can continue to play the game without having to pay real money as a game fee.

Furthermore, the present invention relates also to a video game control method that uses a plurality of video game apparatuses and a management server that is connected to the a plurality of video game apparatuses such that data communication can take place therebetween, allows a player to play a prescribed game via game screens, and transfers prescribed pseudo-values among the video game apparatuses in accordance with the game results, wherein the method includes a storage step in which player information that includes information regarding virtual money used in the game is stored for each player registered using a personal card, a first conversion step in which conversion between the virtual money and real money is performed using a prescribed conversion rate, a second conversion step in which conversion between the virtual money and the prescribed pseudo-values is performed using a prescribed conversion rate, a virtual money accumulation step in which virtual money is added to the storage area for the player information for the individual player whose player information was stored in the storage means via a personal card, based on the calculation performed in the first conversion step, and a game result integration step in which the amount of increase or decrease in the prescribed pseudo-values that occurs each time the game is executed is converted into virtual money using the second conversion step, addition or subtraction of the amount of increase or decrease is performed to or from the amount of the player's current virtual money stored in the storage means, and the player information stored in the storage step is updated, and wherein at least one of the storage step, the first conversion step, the second conversion step, the virtual money accumulation step and the game result integration step is executed by the management server, and the remaining steps are executed by the video game apparatus.

According to the invention in the above form, in the plurality video game apparatuses and the management server that is connected to the plurality of video game apparatuses such that data communication can take place therebetween, player information is stored for each player registered using a personal card in the storage step, conversion is performed between the virtual money and real money using a prescribed conversion rate in the first conversion step, and conversion is performed between the virtual money and the prescribed pseudo-values using a prescribed conversion rate in the second conversion step. Furthermore, in the virtual money accumulation step, virtual money is added to the storage area for the player information for the individual player whose player information was stored in the storage step via a personal card, based on the calculation performed in the first conversion step. In the game result integration step, the amount of increase or decrease in the prescribed pseudo-values that occurs each time the game is executed is converted into virtual money using the second conversion step, addition or subtraction of the amount of increase or decrease is performed to or from the amount of the player's current virtual money stored in the storage means, and the player information stored in the storage step is updated. Moreover, because the virtual money has an exchange rate relative to the pseudo-values in the game space, the administrator of the video game system can receive a constant revenue in accordance with the player's game play conditions. Furthermore, because the player's virtual money is accumulated if the player keeps winning, the player can continue to play the game without having to pay real money as a game fee.

The plurality of video game apparatuses and the management server that is connected to the plurality of video game apparatuses such that data communication can take place therebetween are composed of the storage step, the first conversion step, the second conversion step, the virtual money accumulation step, and the game result integration step. At least one of the storage step, the first conversion step, the second conversion step, the virtual money accumulation step, and the game result integration step is executed by the management server, and the remaining steps are executed by the video game apparatus.

Therefore, in the plurality of video game apparatuses and the management server that is connected to the plurality of video game apparatuses such that data communication can take place therebetween, the administrator of the video game can develop software in accordance with such factors as the type of game, the intended use of each terminal device and the scale of the business. Furthermore, because the functions executed by the computer are shared by the video game apparatus and the management server, there is greater flexibility in software development.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

**Claims**

1. A video game system that has game execution means that allows a player to play a prescribed game via a game screen and that receives and transfers prescribed pseudo-values based on the game result, said video game system comprising:

   storage means for storing player information that includes information regarding virtual money used in the game for each player registered using a personal card;
   first conversion means for performing a conversion between the virtual money and real money using a prescribed conversion rate;
   second conversion means for performing a conversion between the virtual money and the prescribed pseudo-values using a prescribed conversion rate;

virtual money accumulation means for adding virtual money to the storage area for the player information for the player whose player information was stored in the storage means via a personal card, based on the calculation performed by said first conversion means; and

game result integration means for converting the amount of increase or decrease in the prescribed pseudo-values that occurs each time the game is executed by said game execution means into virtual money using said second conversion means, performs addition or subtraction of the amount of increase or decrease to or from the amount of the player's current virtual money stored in the storage means, and updating the player information in said storage means.

2. The video game system according to Claim 1, further comprising game fee settlement means for converting the game fee charged each time the game is executed by said game execution means into virtual money using said second conversion means, subtracting the virtual money amount obtained as a result of said conversion from the player's current amount of virtual money stored in said storage means, and updating the player information in said storage means.

3. The video game system according to Claim 1 or Claim 2, wherein said game includes a mah-jongg game that treats points of point counters as said prescribed pseudo-values.

4. The video game system according to any of Claims 1 through 3, further comprising authentication means that determines whether or not a player is permitted to join a game by performing authentication to determine whether or not a player who has been received into the system via said personal card is a registered player.

5. The video game system according to Claim 4, further comprising fingerprinting means for acquiring fingerprints, wherein said storage means receives at the time of registration the fingerprint data of the player to be registered and stores it in the storage area for the player information corresponding to that player, and said authentication means obtains the player fingerprint data in connection with the reception of the personal card and compares it with the fingerprint data stored in the corresponding player information storage area.

6. A video game apparatus that has game execution means that allows a player to play a prescribed game via game screens and that receives and transfers prescribed pseudo-values based on the game results, said video game apparatus comprising:

storage means that stores player information that includes information regarding virtual money used in the game for each player registered using a personal card;

first conversion means that performs conversion between the virtual money and real money using a prescribed conversion rate;

second conversion means that performs conversion between the virtual money and the prescribed pseudo-values using a prescribed conversion rate;

virtual money accumulation means that adds virtual money to the storage area for the player information for the player whose player information was stored in the storage means via a personal card, based on the calculation performed by said first conversion means; and

game result integration means that converts the amount of increase or decrease in the prescribed pseudo-values that occurs each time the game is executed by said game execution means into virtual money using said second conversion means, performs addition or subtraction of the amount of increase or decrease to or from the player's current amount of virtual money stored in the storage means, and updates the player information in said storage means.

7. A video game execution control method executed by a video game apparatus that transfers/receives prescribed pseudo-values based on the game results, and that allows a player to play a prescribed game via a game screen, said method comprising:

a storage step in which said video game apparatus stores player information that includes information regarding virtual money used in said game for each player registered using a personal card;

a first conversion step in which said video game apparatus performs conversion between said virtual money and real money using a prescribed conversion rate;

a second conversion step in which said video game apparatus performs conversion between said virtual money and said prescribed pseudo-values using a prescribed conversion rate;

a virtual money accumulation step in which said video game apparatus adds virtual money to the storage area for the player information for the individual player whose player information was stored in said storage means via a personal card, based on the calculation performed in said first conversion step; and

a game result integration step in which said video game apparatus converts the amount of increase or decrease in said prescribed pseudo-values that occurs each time the game is executed via said game execution step into virtual money using said second conversion step, performs addition or subtraction of said amount of increase or decrease to or from the player's current amount of virtual money stored in said storage means, and updates the player information stored in said storage step.

8. A video game control method that uses a plurality of video game apparatuses and a management server that is connected to the plurality of video game apparatuses such that data communication can take place therebetween, allows a player to play a prescribed game via game screens, and receives/transfers prescribed pseudo-values among the video game apparatuses in accordance with the game results, said method comprising:

a storage step in which said video game apparatus stores player information that includes information regarding virtual money used in said game for each player registered using a personal card;

a first conversion step for performing conversion between said virtual money and real money using a prescribed conversion rate;

a second conversion step for performing conversion between said virtual money and said prescribed pseudo-values using a prescribed conversion rate;

a virtual money accumulation step for adding virtual money to the storage area for the player information for the player whose player information was stored in said storage means via a personal card, based on the calculation performed in said first conversion step; and

a game result integration step for converting the amount of increase or decrease in said prescribed pseudo-values that occurs each time the game is executed via said game execution step into virtual money using said second conversion step, performing addition or subtraction of said amount of increase or decrease to or from the player's current amount of virtual money stored in said storage means, and updating the player information stored in said storage step,

wherein at least one of said storage steps, said first conversion step, said second conversion step, said virtual money accumulation step and said game result integration step is executed by said management server, and the remaining steps are executed by said video game apparatuses.

# FIG.1

MANAGEMENT SERVER 3

ADSL.etc

Internet

ARCADE A
ADSL.etc 2
ARCADE-BASED SERVER
CLIENTS
1

ARCADE B
ADSL.etc
ARCADE-BASED SERVER
CLIENTS

••••EACH ARCADE

ARCADE C
ADSL.etc
ARCADE-BASED SERVER
CLIENTS

# FIG.2

11,11a

12

14,14a

13

15

1

151

# FIG.3

# FIG.4

161

162

**GAME EXECUTION UNIT** — 161A

161a — ITEM ASSIGNING UNIT

161b — PERFORMANCE DETERMINATION UNIT

161c — GAME MODE SELECTION UNIT

161d — ITEM TRANSFER UNIT

161f — DAN DETERMINATION UNIT

161g — PARAMETER CALCULATION UNIT

161h — DESCRIPTOR ASSIGNING UNIT

161k — OPPONENT DISPLAY UNIT

161m — REAL MONEY CONVERSION UNIT

161n — PSEUDO-VALUES CONVERSION UNIT

161o — GAME FEE SETTLEMENT UNIT

161p — GAME RESULT INTEGRATION UNIT

RANK STORAGE UNIT — 162a

HISTORY STORAGE UNIT — 162b

DESCRIPTOR STORAGE UNIT — 162c

# FIG.5

FIG.6

# FIG.7

CPU 361

RAM 362

ROM 363

36

NETWORK COMMUNICATION UNIT 38

NETWORK

STORAGE DEVICE 37

BA

EP 1 304 667 A2

# FIG.8

MANAGEMENT SERVER — 3

PLAYER AUTHENTICATION UNIT — 361a

VIRTUAL MONEY ACCUMULATION UNIT — 361b

PLAYER INFORMATION STORAGE UNIT — 371

NETWORK

EACH ARCADE

ARCADE A — 2

ARCADE-BASED SERVER

ARCADE B — 2

ARCADE-BASED SERVER

1

1

11 — MONITOR

11a — TOUCH PANEL

13 — CARD READER

14a — FINGERPRINT VERIFICATION UNIT

15 — COIN RECEIVING UNIT

162 — RAM

163 — ROM

CLIENT TERMINAL

GAME EXECUTION UNIT — 161A

REAL MONEY CONVERSION UNIT — 161m

PSEUDO-VALUES CONVERSION UNIT — 161n

GAME FEE SETTLEMENT UNIT — 161o

GAME RESULT INTEGRATION UNIT — 161p

1

# FIG.9

```
                    ┌──────────────┐
                    │    START     │
                    └──────┬───────┘
                           │
                           ▼
            ┌──────────────────────────┐
   ST1 ─────│ PLAYER                   │
            │ AUTHENTICATION           │
            └──────────┬───────────────┘
                       │        ◄──────────────────┐
                       ▼                            │
            ┌──────────────────────────┐            │
   ST2 ─────│      GAME ENTRY          │            │
            └──────────┬───────────────┘            │
                       │                            │
                       ▼                            │
            ┌──────────────────────────┐            │
   ST3 ─────│          GAME            │            │
            └──────────┬───────────────┘            │
                       │                            │
                       ▼                            │
            ┌──────────────────────────┐            │
   ST4 ─────│ GAME RESULT              │            │
            │ INTEGRATION              │            │
            └──────────┬───────────────┘            │
                       │                            │
                       ▼                            │
   ST5 ──────  ◇ CONTINUE? ◇  ─── YES ──────────────┘
                       │
                       │ NO
                       ▼
            ┌──────────────────────────┐
            │          END             │
            └──────────────────────────┘
```

# FIG.10

```
    ( PLAYER
      AUTHENTICATION )
            |
            v
    [ RECEIVE PERSONAL      ]  ~ST101
    [ CARD                  ]
            |
            v
    [ SEND CARD ID          ]  ~ST103
            |
            v
    < FIRST TIME TO >  ~ST105 ---NO--->  [ DISPLAY AUTHENTICATION ]  ~ST117
    <   PLAY?      >                     [ DATA INPUT SCREEN      ]
            |                                     |
           YES                                    v
            v                            [ RECEIVE PERSONAL      ]  ~ST119
    [ DISPLAY NAME INPUT    ]  ~ST107    [ DATA INPUT            ]
    [ SCREEN               ]                      |
            |                                     v
            v                            [ SEND PERSONAL DATA    ]  ~ST121
    [ DISPLAY AUTHENTICATION]  ~ST109              |
    [ DATA INPUT SCREEN     ]                     v
            |                            < AUTHENTICATION >  ~ST123
            v                            <    OK?         >
    [ RECEIVE PERSONAL      ]  ~ST111      YES |    NO
    [ DATA INPUT            ]                  |    v
            |                                  |  [ DISPLAY ERROR SCREEN ]  ~ST125
            v
    [ SEND PERSONAL DATA    ]  ~ST113
            |
            v
    [ DISPLAY NAME PLATE    ]  ~ST115
    [ SCREEN               ]
            |
            v
      ( RETURN )
```

# FIG.11

EP 1 304 667 A2

**NAME REGISTRATION** 501

502 {

た ろ う

| あ | い | う | え | お | ア | イ | ウ | エ | オ | A | B | C | D | E | F | G |
| か | き | く | け | こ | カ | キ | ク | ケ | コ | H | I | J | K | L | M | N |
| さ | し | す | せ | そ | サ | シ | ス | セ | ソ | O | P | Q | R | S | T | U |
| た | ち | つ | て | と | タ | チ | ツ | テ | ト | V | W | X | Y | Z | . | . |
| な | に | ぬ | ね | の | ナ | ニ | ヌ | ネ | ノ | | | | | | | |
| は | ひ | ふ | へ | ほ | ハ | ヒ | フ | ヘ | ホ | 0 | 1 | 2 | 3 | 4 | 5 | 6 |
| ま | み | む | め | も | マ | ミ | ム | メ | モ | 7 | 8 | 9 | + | − | : | ' |
| や | | ゆ | | よ | ヤ | | ユ | | ヨ | | | | | | | |
| ら | り | る | れ | ろ | ラ | リ | ル | レ | ロ | ! | ? | & | * | @ | ~ | / |
| わ | | を | | ん | ワ | | ヲ | | ン | | | | | | | |
| あ | い | う | え | お | ア | イ | ウ | エ | オ | | | | | | | |
| や | | ゆ | | よ | ヤ | | ユ | | ヨ | | | | | | | |
| つ | | | | . | ヤ | | ー | | 、 | | | | | | | |
| | | | | 。 | ツ | | | | 。 | | | | | | | |

DELETE ACCEPT

500 503 504

# FIG.12

| | FINGERPRINT ENTRY | ① |

PLEASE PLACE YOUR FINGER ON THE GLASS SURFACE
AT THE UPPER RIGHT OF THE SCREEN

ROUND 1,
DEAL 1

×0

×0

REMAINING
TILES
00

PERSONAL
DATA

STORE
INFORMATION

CONFIRM
COUNTERS

HELP

EXIT

REACH | 'CHI' | 'PON' | 'KAN' | WIN | PROCEED → | ON·OFF

511
512
513
510

EP 1 304 667 A2

## FIG.13

PASSWORD ENTRY

521

①

ROUND 1,
DEAL 1

×0

×0

REMAINING
TILES
00

4 3 5 7

| 1 | 2 | 3 |
| 4 | 5 | 6 |
| 6 | 8 | 9 |
| 0 | → | OK |

PERSONAL
DATA

STORE
INFORMATION

CONFIRM
COUNTERS

HELP

| REACH | 'CHI' | 'PON' | 'KAN' | WIN | PROCEED → | ON·OFF |

EXIT
▼

520

523   522

EP 1 304 667 A2

FIG.14

EP 1 304 667 A2

GRADE 10

532

531

KUBOTA  TARO  BJORK  AKASHI  YOSHIKAWA

MAKIISHI  TAKASHI  INDY  DEC  VIPE

530

# FIG.15

```
           ┌─────────────────────┐
           │     GAME ENTRY      │
           └─────────────────────┘
                     │
                     ▼
        ┌─────────────────────────┐
        │   SELECT GAME MODE      │────── ST201
        └─────────────────────────┘
                     │
                     ▼
        ┌─────────────────────────┐
        │     SELECT TABLE        │────── ST203
        └─────────────────────────┘
                     │
                     ▼
        ┌─────────────────────────┐
        │   DISPLAY COUNTER       │────── ST205
        │   CONVERSION SCREEN     │
        └─────────────────────────┘
                     │        ST207
                     ▼
              ◇─────────────◇
             ╱  SUFFICIENT   ╲      YES
            ◇  VIRTUAL MONEY   ◇─────────┐
             ╲    EXISTS?     ╱          │
              ◇─────────────◇           │
                     │ NO               │
                     ▼                  │
        ┌─────────────────────────┐     │
        │   DISPLAY ADDITION      │──── ST209
        │   REQUEST SCREEN        │     │
        └─────────────────────────┘     │
                     │                  │
                     ▼                  │
        ┌─────────────────────────┐     │
        │     RECEIVE COIN        │──── ST211
        └─────────────────────────┘     │
                     │                  │
                     ▼                  │
        ┌─────────────────────────┐     │
        │  CONVERT TO VIRTUAL     │──── ST213
        │  MONEY                  │     │
        └─────────────────────────┘     │
                     │◀─────────────────┘
                     ▼
        ┌─────────────────────────┐
        │    SETTLE GAME FEE      │──── ST215
        └─────────────────────────┘
                     │
                     ▼
           ┌─────────────────────┐
           │       RETURN        │
           └─────────────────────┘
```

# FIG.16

**LOBBY**

SELECT A GAME MODE.

| ONE-PLAYER GAME | MATCH GAME | ONLINE GAME |
|---|---|---|
| SELECT | SELECT | SELECT |
| PLAY MAH-JONGG WITH THREE PLAYERS CREATED BY THE CPU. | PLAY MAH-JONGG WITH PLAYERS IN THIS ARCADE. | PLAY MAH-JONGG WITH PLAYERS NOT LOCATED IN THIS ARCADE OVER A NETWORK. |

1
TARO
PHOENIX  3RD DEGREE MASTER

①

ROUND 1, DEAL 1

×2
×0

REMAINING TILES
28

PERSONAL DATA

STORE INFORMATION

CONFIRM COUNTERS

**ARCADE INFORMATION**

| 2 FIRST ROUND JIRO PHOENIX 4TH DEGREE MASTER POINTS: 25,000 | 3 NEW PLAYER WELCOME!! | 4 FIRST ROUND 1 HANAKO GRADE 2 NOVICE POINTS: 13,000 | 5 FIRST ROUND 3 JOE TIGER 10TH DEGREE MASTER POINTS: 13,000 | 6 NEW PLAYER WELCOME!! | 7 NEW PLAYER WELCOME!! | 8 FIRST ROUND 2 HAJIME GRADE 10 NOVICE POINTS: 19,000 |

HELP

EXIT ▼

# FIG.17

LOBBY

ONE-PLAYER GAME
SELECT
PLAY MAH-JONGG WITH THREE PLAYERS CREATED BY THE CPU.

MATCH GAME
SELECT
PLAY MAH-JONGG WITH PLAYERS IN THIS ARCADE.

ONLINE GAME
SELECT
PLAY MAH-JONGG WITH PLAYERS NOT LOCATED IN THIS ARCADE OVER A NETWORK.

SELECT A GAME MODE.

**30**

REACH | 'CHI' | 'PON' | 'KAN' | WIN | PROCEED → | ON·OFF

550

551

EP 1 304 667 A2

# FIG.18

562

**LOBBY**

CHOOSE A TABLE WHERE YOU WOULD LIKE TO PLAY.

| CREATE NEW TABLE | CREATE |
|---|---|
| REQUIRED VM: 35,000 | 30 |

A NEW GAME PLAY TABLE (ONE-ROUND GAME) WILL BE CREATED.

| ONE-ROUND GAME A | JOIN |
|---|---|
| REQUIRED VM: 35,000 | 09 |

| NUMBER | NAME | RANK |
|---|---|---|
| 1 | JOHN | 1ST DEGREE MASTER |
| 2 | BILL | 2ND DEGREE MASTER |

| ONE-ROUND GAME B | JOIN |
|---|---|
| CONDITIONS NOT MET | |

| NUMBER | NAME | RANK |
|---|---|---|
| 3 | STEVE | 3RD DEGREE MASTER |

DRAGON KING MATCH

| ONE-ROUND GAME C | JOIN |
|---|---|
| CURRENT: ROUND 1, DEAL 4 | |

| NUMBER | NAME | RANK |
|---|---|---|
| 4 | BOB | GRADE 1 |

| TWO-ROUND GAME A | JOIN |
|---|---|
| REQUIRED VM: 45,000 | 30 |

| NUMBER | NAME | RANK |
|---|---|---|
| 5 | DAVE | 6TH DEGREE MASTER |

| TWO-ROUND GAME B | JOIN |
|---|---|
| CURRENT: ROUND 2, DEAL 2 | |

| NUMBER | NAME | RANK |
|---|---|---|
| 6 | MIKE | 10TH DEGREE MASTER |

| TITLE GAME | JOIN |
|---|---|
| CONDITIONS NOT MET | |

| NUMBER | NAME | RANK |
|---|---|---|
| 7 | TOM | 4TH DEGREE MASTER |

MAH-JONGG HOLY WAR

VIRTUAL MONEY OWNED: 50,000 VM
* TO OBTAIN MORE VIRTUAL MONEY, INSERT A COIN.
(1CREDIT=10,000VM MAX:70,000VM)

561   563   561   562   563   560   564

# FIG.19

CHIP EXCHANGE CENTER

① ROUND 1, DEAL 1

×2
×0

REMAINING TILES
28

571 — CURRENTLY OWNED VM

FACILITY FEE — 572

ONE-ROUND GAME
15,000VM

PERSONAL DATA

STORE INFORMATION

CONFIRM COUNTERS

33,333VM

15,000VM

573 — NAME TIGER  3RD DEGREE MASTER  33333VM
[1 CREDIT=10,000VM]

HELP

EXIT

REACH | 'CHI' | 'PON' | 'KAN' | WIN | PROCEED → | ON·OFF

573a        570        573c    573b

EP 1 304 667 A2

# FIG.20

CHIP EXCHANGE CENTER

CURRENTLY OWNED VM

CURRENT POINTS

×10

ROUND 1, DEAL 1

×2

×0

REMAINING TILES

28

581

582

33,333VM

25,000PTS

PERSONAL DATA

STORE INFORMATION

CONFIRM COUNTERS

NAME TIGER   3RD DEGREE MASTER   33333VM
[1 CREDIT=10,000 VM]

HELP

REACH  'CHI'  'PON'  'KAN'  WIN  PROCEED →  ON·OFF

EXIT

580

EP 1 304 667 A2

# FIG.21

```
                    START

                                      ST301
         DISPLAY LIST OF
         OPPONENTS

                                      ST303
         DETERMINE
         ROUND, DEALER

                                      ST305
              GAME

                                      ST307
         DETERMINE FINISH ORDER

                                      ST309
         CHANGE CHIPS AND POINTS

                        ST311
              PROMOTION            NO
              TO 1ST DEGREE
              MASTER?
                   YES
                                      ST313
         CALCULATE PARAMETERS

                                      ST315
         ASSIGN DESCRIPTOR

                   RETURN
```

FIG.22

591
591a
591b
591c
PDB
BNB

1

ROUND 1, DEAL 1
×00
×00
REMAINING TILES 22

PERSONAL DATA
STORE INFORMATION
CONFIRM COUNTERS
HELP
EXIT ▶

TARO
DRAGON,
1ST DEGREE MASTER
20,000 POINTS

HANAKO
TURTLE,
GRADE 4 NOVICE
20,000 POINTS

JIRO
PHOENIX,
2ND DEGREE MASTER
20,000 POINTS

JOE
TIGER,
3RD DEGREE MASTER
20,000 POINTS

REACH 'CHI' 'PON' 'KAN' WIN PROCEED ON·OFF

590

45

# FIG.23

604 603

ROUND 1,
DEAL 1

×2

×0

REMAINING
TILES
28

PDB — PERSONAL DATA

STORE INFORMATION

BNB — CONFIRM COUNTERS

602

601

HELP

EXIT

| REACH | 'CHI' | 'PON' | 'KAN' | WIN | PROCEED → | ON·OFF |

600B 600C 600D 600E 600 600F 600G 600H

EP 1 304 667 A2

## FIG.24

**613**

**1**

ROUND 1,
DEAL 1

×2
×0

REMAINING
TILES
**28**

**612**

PERSONAL
DATA — PDB

STORE
INFORMATION

CONFIRM
COUNTERS — BNB

HELP

EXIT

3
TARO
DRAGON,
1ST DEGREE MASTER
18,000 POINTS

**614**

4
HANAKO
TURTLE,
GRADE 4 NOVICE
28,700 POINTS

2
JIRO
PHOENIX,
2ND DEGREE MASTER
17,000 POINTS

**615a**
**615b**
**615c**

1
JOE
TIGER,
3RD DEGREE MASTER
16,100 POINTS

四萬 | 伍萬 | | | M/W | | | | | 88 | 88 | 中 | 八萬

REACH | 'CHI' | 'PON' | 'KAN' | WIN | PROCEED → | ON·OFF

**611**

**610**

**615**

EP 1 304 667 A2

# FIG.25

4TH PLACE

11400
-10000

1,400 POINTS

1ST PLACE

24300
+10000

34,300 POINTS

621
621a
621b

2ND PLACE

23300
+ 5000

28,300 POINTS

3RD PLACE

20000
- 5000

15,000 POINTS

1

ROUND 1, DEAL 1

×0

×0

REMAINING TILES

00

PERSONAL DATA — PDB

STORE INFORMATION

CONFIRM COUNTERS — BNB

HELP

EXIT

| REACH | 'CHI' | 'PON' | 'KAN' | WIN | PROCEED → | ON·OFF |

620

EP 1 304 667 A2

# FIG.26

POINTS EARNED:
## 32,000+20,000=52,000

CURRENT GAME STATISTICS

| | |
|---|---|
| WIN RATIO : | 32.25% |
| AVERAGE WIN : | 13.40% |
| FURIKOMI RATIO : | 00.75% |
| DORA USAGE RATIO : | 66.60% |

| REACH | 'CHI' | 'PON' | 'KAN' | WIN | PROCEED → |
|---|---|---|---|---|---|

601

632

630

EP 1 304 667 A2

## FIG.27

641 —

NAME: TARO      VIRTUAL MONEY: 57,300 VM

RANK: GRADE 3    EMPIRICAL VALUE ACQUIRED : 777PTS.

CURRENT RANKING :

●TITLES EARNED●

642 —

FOUR ATTRIBUTES DISTRIBUTION MAP

TURTLE

TIGER — — DRAGON

PHOENIX

ONE-DEAL GAMES:   TOTAL: 0    LOST

0 WINS    0 LOSSES    0 FURIKOMI

ONE-ROUND GAMES:   TOTAL: 0    LOST

($1^{ST}$PLACE 0, $2^{ND}$PLACE 0, $3^{RD}$PLACE 0, $4^{TH}$PLACE 0)

TWO-ROUND GAMES:   TOTAL: 0    LOST

($1^{ST}$PLACE 0, $2^{ND}$PLACE 0, $3^{RD}$PLACE 0, $4^{TH}$PLACE 0)

AVERAGE FINISH:    0.00 PLACE

TOTAL VIRTUAL MONEY EARNED:  99,990,000VM

TOTAL VIRTUAL MONEY LOST:  9,999VM

WIN    RATIO :    40.00%

AVERAGE EXPONENTIALS:    3.00

FURIKOMI RATIO:    30.00%

DORA USAGE RATIO:    200.00%

REACH WINS RATIO:    0.00%

SELF-DRAW (TSUMO) WIN RATIO:    50.00%

NUMBER OF QUADRUPLE LIMIT    0
(YAKUMAN) WINS:

TOTAL

WINNING HAND DISTRIBUTION

GAME RECORD

GEMSTONES POSSESSED

BACK

① 

ROUND 1, DEAL 1 — TIB

×2

×0 — RDB

REMAINING TILES
28

PERSONAL DATA — PDB

STORE INFORMATION — FRB

CONFIRM COUNTERS — BNB

— HDB

HELP

— BB

EXIT

640

643

EP 1 304 667 A2

50

## FIG.28

| HAND | NUMBER | PROBABILITY | HAND | NUMBER | PROBABILITY |
|------|--------|-------------|------|--------|-------------|
| **DISTRIBUTION OF WINNING HANDS** | | | NUMBER OF WINNING HANDS: 4 | | |
| REACH | 0 | 0.00% | DOUBLE REACH | 0 | 0.00% |
| STRONGLY CLOSED | 0 | 0.00% | ONE-OUT | 0 | 0.00% |
| VALUELESS HAND | 0 | 0.00% | NO TERMINALS | 0 | 0.00% |
| SPECIAL CHAR | 0 | 0.00% | NINE-TILE STRAIGHT | 0 | 0.00% |
| BLOSSOM ON THE HILL | 0 | 0.00% | ROBBING A KONG | 0 | 0.00% |
| CATCHING THE MOON FROM THE BOTTOM OF THE SEA | 0 | 0.00% | CATCHING THE FISH FROM THE BOTTOM OF THE RIVER | 0 | 0.00% |
| TWO IDENTICAL SEQUENCES | 0 | 0.00% | DOUBLE OF TWO IDENTICAL SEQUENCES | 0 | 0.00% |
| EVERY SET INCLUDING MIXED TERMINALS | 0 | 0.00% | EVERY SET INCLUDING TERMINALS | 0 | 0.00% |
| THREE SIMILAR SEQUENCES | 0 | 0.00% | THREE SIMILAR TRIPLETS | 0 | 0.00% |
| SEVEN PAIRS | 0 | 0.00% | ALL TRIPLETS | 0 | 0.00% |
| THREE CONCEALED TRIPLETS | 0 | 0.00% | THREE QUARTETS | 0 | 0.00% |
| MIXED ONE-SUIT | 0 | 0.00% | PURE ONE-SUIT | 0 | 0.00% |
| MIXED TERMINALS | 1 | 25.00% | SMALL THREE DRAGONS | 0 | 0.00% |
| DORA | 8 | 200.00% | END DISCARDS | 0 | 0.00% |
| PURE TERMINALS | 0 | 0.00% | BIG THREE DRAGONS | 0 | 0.00% |
| SMALL FOUR WINDS | 0 | 0.00% | BIG FOUR WINDS | 0 | 0.00% |
| FOUR CONCEALED TRIPLETS | 0 | 0.00% | FOUR QUARTETS | 0 | 0.00% |
| ALL GREEN | 0 | 0.00% | ALL HONORS | 0 | 0.00% |
| THIRTEEN ORPHANS | 0 | 0.00% | NINE LANTERNS | 0 | 0.00% |
| BLESSING OF HEAVEN | 1 | 25.00% | BLESSING OF EARTH | 0 | 0.00% |
| BLESSING OF MAN | 0 | 0.00% | THE CHARIOT | 0 | 0.00% |
| DEALER EIGHT TIMES | 0 | 0.00% | YAKUMAN | 0 | 0.00% |

TOTAL

WINNING HAND DISTRIBUTION

GAME RECORD

GEMSTONES POSSESSED

BACK

① — TIB

ROUND 1, DEAL 1

×2

×0 — RDB

REMAINING TILES 28 — PDB

PERSONAL DATA — FRB

STORE INFORMATION

CONFIRM COUNTERS — BNB

HDB

HELP

EXIT — BB

651   652   653   650

EP 1 304 667 A2

## FIG.29

**GAME RESULTS DATA** — 660

Labels: 661, 662, 663, 664, 665

| GAMES PRIOR | GAME TYPE | FINISH | POINTS | DATE , TIME |
|---|---|---|---|---|
| 1 | TWO ROUNDS | 3RDPLACE | 10900 | 01/ /200_ , 00:00 |
| 2 | ONE ROUND | 3RDPLACE | 11100 | 01/ /200_ , 00:00 |
| 3 | ONE DEAL | FURIKOMI | 5000 | 01/ /200_ , 00:00 |
| 4 | TWO ROUNDS | BUTTOBI | 5200 | 01/ /200_ , 00:00 |
| 5 | TWO ROUNDS | BUTTOBI | 13500 | 01/ /200_ , 00:00 |
| 6 | ONE ROUND | 2NDPLACE | 14300 | 01/ /200_ , 00:00 |
| 7 | ONE ROUND | 3RDPLACE | 7900 | 01/ /200_ , 00:00 |
| 8 | TWO ROUNDS | 3RDPLACE | 24000 | 01/ /200_ , 00:00 |
| 9 | ONE DEAL | FURIKOMI | 20900 | 01/ /200_ , 00:00 |
| 10 | ONE ROUND | 3RDPLACE | 9900 | 01/ /200_ , 00:00 |
| 11 | ONE ROUND | 2NDPLACE | 7700 | 01/ /200_ , 00:00 |
| 12 | TWO ROUNDS | 1STPLACE | 20300 | 01/ /200_ , 00:00 |
| 13 | TWO ROUNDS | 1STPLACE | 1700 | 01/ /200_ , 00:00 |
| 14 | ONE ROUND | 4THPLACE | 26200 | 01/ /200_ , 00:00 |
| 15 | ONE DEAL | TSUMOBARAI | 6700 | 01/ /200_ , 00:00 |

Graph — 666: 1STPLACE, 2NDPLACE, 3RDPLACE, 4THPLACE (columns 1–15)

Right side panel:
- TOTAL
- WINNING HAND DISTRIBUTION
- GAME RECORD
- GEMSTONES POSSESSED
- BACK

- 1
- ROUND 1, DEAL 1 — TIB
- ×2
- ×0 — RDB
- REMAINING TILES 28
- PERSONAL DATA — PDB
- STORE INFORMATION — FRB
- CONFIRM COUNTERS — BNB
- HELP — HDB
- EXIT — BB

## FIG.30

**GEMSTONES POSSESSED** — 671, 672

**GAME COMPATIBILITY TABLE**

|         | − | 0 | + |
|---------|---|---|---|
| DRAGON  |   |   |   |
| TIGER   |   |   |   |
| TURTLE  |   |   |   |
| PHOENIX |   |   |   |

SPECIAL GEMSTONES
EARNED:                     1

TOTAL GEMSTONES
EARNED:                    86

TOTAL GEMSTONES
LOST:                     526

CURRENT NUMBER OF
GEMSTONES:                  0

TOTAL

WINNING HAND DISTRIBUTION

GAME RECORD

GEMSTONES POSSESSED

BACK

ROUND 1, DEAL 1 — TIB

×2

×0

REMAINING TILES
28 — RDB

PERSONAL DATA — PDB

STORE INFORMATION — FRB

CONFIRM COUNTERS — BNB

HELP — HDB

EXIT — BB

673

670

EP 1 304 667 A2

# FIG.31

GAME RESULT
INTEGRATION

DISPLAY COUNTER
RETURN SCREEN — ST401

CONVERT COUNTERS
INTO VIRTUAL MONEY — ST403

CALCULATE AMOUNT OF
INCREASE OR DECREASE
IN VIRTUAL MONEY — ST405

UPDATE PLAYER INFORMATION — ST407

RETURN

# FIG.32

**CHIP EXCHANGE CENTER**

CURRENTLY OWNED VM

CURRENT POINTS

×10

33,333VM

25,000PTS

NAME TIGER  3RD DEGREE MASTER  33333VM
[1CREDIT=10,000VM]

| REACH | 'CHI' | 'PON' | 'KAN' | WIN | PROCEED → | ON·OFF |

①

ROUND 1, DEAL 1

×2

×0

REMAINING TILES 28

PERSONAL DATA

STORE INFORMATION

CONFIRM COUNTERS

HELP

EXIT

682

681

683

680

EP 1 304 667 A2